(19) Europäisches Patentamt
European Patent Office
Office européen des brevets

(11) EP 3 388 463 B1

(12) **EUROPEAN PATENT SPECIFICATION**

(45) Date of publication and mention of the grant of the patent:
**02.10.2019 Bulletin 2019/40**

(21) Application number: **16873119.8**

(22) Date of filing: **09.12.2016**

(51) Int Cl.:
***C08G 64/04*** *(2006.01)*
***C08L 69/00*** *(2006.01)*
***C08G 64/06*** *(2006.01)*
***B29C 45/00*** *(2006.01)*
*B29K 69/00 (2006.01)*
*B29K 105/00 (2006.01)*
*C08K 5/524 (2006.01)*

(86) International application number:
**PCT/JP2016/086761**

(87) International publication number:
**WO 2017/099226 (15.06.2017 Gazette 2017/24)**

(54) **POLYCARBONATE RESIN COMPOSITION FOR THIN OPTICAL COMPONENT, AND METHOD FOR PRODUCING THIN OPTICAL COMPONENT**

POLYCARBONATHARZZUSAMMENSETZUNG FÜR EINE DÜNNE OPTISCHE KOMPONENTE UND VERFAHREN ZUR HERSTELLUNG EINER DÜNNEN OPTISCHEN KOMPONENTE

COMPOSITION DE RÉSINE DE POLYCARBONATE DESTINÉE À UN ÉLÉMENT OPTIQUE MINCE ET PROCÉDÉ SERVANT À LA PRODUCTION D'UN ÉLÉMENT OPTIQUE MINCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.12.2015 JP 2015242170**
**18.12.2015 JP 2015247592**
**21.12.2015 JP 2015248695**

(43) Date of publication of application:
**17.10.2018 Bulletin 2018/42**

(73) Proprietors:
- **Mitsubishi Chemical Corporation**
  **Tokyo 100-8251 (JP)**
- **Mitsubishi Engineering-Plastics Corporation**
  **Tokyo 105-0021 (JP)**

(72) Inventors:
- **NISHIHARA, Ryouhei**
  **Hiratsuka-shi**
  **Kanagawa 254-0016 (JP)**
- **MONDEN, Toshiki**
  **Tokyo 1008251 (JP)**

(74) Representative: **Vossius & Partner Patentanwälte Rechtsanwälte mbB**
**Siebertstrasse 3**
**81675 München (DE)**

(56) References cited:
**EP-A1- 1 477 527**
**EP-A1- 2 987 816**
**JP-A- S59 131 623**
**JP-A- 2005 520 925**
**JP-A- 2009 520 071**
**JP-A- 2010 126 605**
**JP-A- 2017 031 245**
**US-A- 4 446 285**
**US-A1- 2003 187 180**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 388 463 B1

**Description**

TECHNICAL FIELD

The present invention relates to a polycarbonate resin composition for a thin optical component, and a method for producing a thin optical component. More specifically, the present invention relates to a polycarbonate resin composition for a thin optical component, having favorable fluidity as well as excellent strength, and a method for producing a thin optical component.

BACKGROUND ART

In liquid crystal display devices used for personal computers, mobile phones, and the like, planar light source devices are incorporated for complying with demands for thinning, weight reduction, power saving, and achievement of higher definition. For the purpose of uniformly and efficiently guiding incident light to the liquid crystal display side, such planar light source devices are provided with a light guide plate having a wedge-shaped cross-section having a uniformly inclined plane on one side, or a flat-plate-shaped light guide plate. In some cases, the light guide plate has an irregular pattern formed on its surface, for imparting light-scattering function.

Such a light guide plate is obtained by injection molding of a thermoplastic resin, and the irregular pattern described above is imparted by transfer of irregularity formed on a surface of an insert. Conventionally, light guide plates have been molded from resin materials such as polymethyl methacrylate (PMMA). However, in recent years, since display devices are required to be capable of displaying clearer images, and heat generated in the vicinity of light sources tends to increase the temperature in the devices, those resin materials are becoming replaced by polycarbonate resin materials having higher heat resistance.

In addition, in recent years, even further thinning has been demanded especially for mobile phones, and further thinning of light guide plates has also been demanded. Although PMMA has an advantage in that thin-wall molding is easily possible because of its excellent fluidity, it has a drawback in that its low impact resistance easily causes cracking upon molding or handling, and upon incorporation into a liquid crystal display device. Although polycarbonate resins have excellent impact resistance, their fluidity is low compared to PMMA. Therefore, molding of very thin light guide plates has been very difficult therewith. In view of this, as described in Patent Document 1 and Patent Document 2, a composition for a light guide plate, which composition achieves more than a certain level of impact resistance while suppressing a decrease in the fluidity by inclusion of a polycarbonate resin having a molecular weight within a particular range, has been proposed. However, because of the recent increasing demand for the thinning, the molecular weights of polycarbonate resins have become even lower for further improvement of the fluidity, causing a problem that cracking occurs upon molding or handling, or upon incorporation into a liquid crystal display device.

On the other hand, a method for improving moldability by further addition of another dihydroxy compound as monomers to a conventional bisphenol A polycarbonate resin has been proposed. For example, Patent Document 3 describes a polycarbonate resin having improved fluidity containing bisphenol A and bisphenol E. Patent Documents 4 and 5 also describe polycarbonate resins having improved fluidity using particular bisphenol compounds. However, such polycarbonate resins also have a problem in that they are impractical because of their extremely low heat resistance, and that, since their fluidity and impact resistance are insufficient for obtaining light guide plates, thin molded articles cannot be obtained. Patent Document 6 discloses a polycarbonate resin blend with improved impact strength comprising 90 weight percent of a polycarbonate resin derived from bisphenol-A and phosgene; and 10 weight percent of a carbonate copolymer derived from a 50-50 weight percent mixture of bisphenol-A and 4,4'-dodecylidenebisphenol, and phosgene.

PRIOR ART DOCUMENTS

[Patent Documents]

[Patent Document 1] JP 2010-37380 A
[Patent Document 2] JP 2013-139097 A
[Patent Document 3] JP 5-1144 A
[Patent Document 4] JP 6-128371 A
[Patent Document 5] JP 59-131623 A
[Patent Document 6] US 4446285 A

SUMMARY OF THE INVENTION

PROBLEMS TO BE SOLVED BY THE INVENTION

The present invention was made in view of such facts, and aims to provide a polycarbonate resin composition for a thin optical component, which composition has favorable fluidity as well as favorable strength, and a method for producing a thin optical component.

MEANS FOR SOLVING THE PROBLEMS

The present inventors intensively studied to solve the above problems, and as a result, discovered that a polycarbonate resin composition for a thin optical component having high fluidity and high strength can be obtained by inclusion of an aromatic polycarbonate copolymer (B) containing a particular amount of a structural unit derived from a particular aromatic dihydroxy compound, in an aromatic polycarbonate resin (A) having a viscosity average molecular weight (Mv) of 10,000 to 15,000, thereby completing the present invention. That is, the present invention is constituted by the following [1] to [7].

[1] A polycarbonate resin composition for a thin optical component, the composition comprising:

100 parts by mass of an aromatic polycarbonate resin (A) having a viscosity average molecular weight (Mv) of 10,000 to 15,000; and
2 to 100 parts by mass of an aromatic polycarbonate copolymer (B) including a carbonate structural unit (i) represented by the following Formula (1):

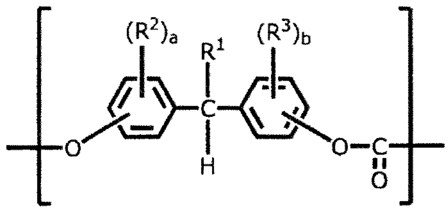
(1)

(wherein in Formula (1), $R^1$ represents $C_8$-$C_{24}$ alkyl or alkenyl; $R^2$ and $R^3$ each independently represent a $C_1$-$C_{15}$ monovalent hydrocarbon group; and a and b each independently represent an integer of 0 to 4) and a carbonate structural unit (ii) represented by the following Formula (2):

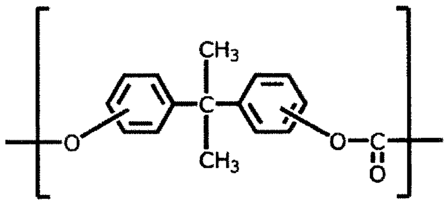
(2) ;

wherein the ratio of the carbonate structural unit (i) to a total of 100 mol% of the carbonate structural unit (i) and the carbonate structural unit (ii) in the aromatic polycarbonate copolymer (B) is more than 10 mol% and less than 39 mol%.

[2] The polycarbonate resin composition for a thin optical component according to [1], further comprising 0.01 to 1 part by mass of polyalkylene glycol or a fatty acid ester thereof (C) with respect to a total of 100 parts by mass of the aromatic polycarbonate resin (A) and the aromatic polycarbonate copolymer (B).
[3] The polycarbonate resin composition for a thin optical component according to [1] or [2], further comprising 0.005 to 0.5 part by mass of a heat stabilizer (D) with respect to a total of 100 parts by mass of the aromatic polycarbonate resin (A) and the aromatic polycarbonate copolymer (B).
[4] The polycarbonate resin composition for a thin optical component according to [3], wherein the heat stabilizer (D) is a phosphorus-based antioxidant.
[5] A method for producing a thin optical component, the method comprising the step of molding the polycarbonate

resin composition recited in any one of [1] to [4].

[6] The method for producing a thin optical component according to [5], wherein the thin optical component is a light guide plate having a thickness of not more than 1 mm.

[7] A method for producing a thin optical component having a thickness of not more than 1 mm, the method comprising the step of performing injection molding of the polycarbonate resin composition recited in any one of [1] to [4] at 260 to 380°C.

EFFECT OF THE INVENTION

By the polycarbonate resin composition for a thin optical component of the present invention, the strength of a molded article after molding can be increased while fluidity sufficient for molding of a thin optical member can be maintained. Therefore, cracking, which may occur in a thin optical member, can be remarkably reduced.

MODE FOR CARRYING OUT THE INVENTION

The present invention is described below in more detail by way of embodiments, and examples. However, the present invention should not be interpreted as being limited to the embodiments, examples, described below.

Unless otherwise specified, the term "to" in the present description is used such that the values described before and after it are included as the lower limit and the upper limit, respectively. Unless otherwise specified, the term "part" means part by mass, which is expressed on a mass basis.

The components constituting the polycarbonate resin composition for a thin optical component, the thin optical component, in the present invention are described below in detail.

[Aromatic Polycarbonate Resin (A)]

The type of the aromatic polycarbonate resin (A) used for the polycarbonate resin composition for a thin optical component of the present invention is not limited. The aromatic polycarbonate resin (A) is a polycarbonate resin that is different from the aromatic polycarbonate copolymer (B). A single type of aromatic polycarbonate resin (A) may be used, or two or more types of aromatic polycarbonate resins (A) may be used in an arbitrary combination at arbitrary ratios.

Examples of the aromatic polycarbonate resin (A) of the present invention include aromatic polycarbonate resins prepared by reacting an aromatic dihydroxy compound with a carbonate-forming compound. In this process, in addition to the aromatic dihydroxy compound and the carbonate-forming compound, a polyhydroxy compound may be reacted. The aromatic polycarbonate resin (A) may be either linear or branched. The polycarbonate resin (A) may be a homopolymer, which is composed of a single kind of repeat units, or may be a copolymer, which includes two or more kinds of repeat units. This copolymer may be selected from various forms of copolymers including random copolymers and block copolymers. Such polycarbonate polymers are normally thermoplastic resins.

Examples of the aromatic dihydroxy compound as a material of the aromatic polycarbonate resin (A) include: dihydroxybenzenes such as 1,2-dihydroxybenzene, 1,3-dihydroxybenzene (that is, resorcinol), and 1,4-dihydroxybenzene; dihydroxybiphenyls such as 2,5-dihydroxybiphenyl, 2,2'-dihydroxybiphenyl, and 4,4'-dihydroxybiphenyl; dihydroxynaphthalenes such as 2,2'-dihydroxy-1,1'-binaphthyl, 1,2-dihydroxynaphthalene, 1,3-dihydroxynaphthalene, 2,3-dihydroxynaphthalene, 1,6-dihydroxynaphthalene, 2,6-dihydroxynaphthalene, 1,7-dihydroxynaphthalene, and 2,7-dihydroxynaphthalene; dihydroxydiaryl ethers such as 2,2'-dihydroxydiphenyl ether, 3,3'-dihydroxydiphenyl ether, 4,4'-dihydroxydiphenyl ether, 4,4'-dihydroxy-3,3'-dimethyldiphenyl ether, 1,4-bis(3-hydroxyphenoxy)benzene, and 1,3-bis(4-hydroxyphenoxy)benzene;

bis(hydroxyaryl)alkanes such as 2,2-bis(4-hydroxyphenyl)propane (that is, bisphenol A), 1,1-bis(4-hydroxyphenyl)propane, 2,2-bis(3-methyl-4-hydroxyphenyl)propane, 2,2-bis(3-methoxy-4-hydroxyphenyl)propane, 2-(4-hydroxyphenyl)-2-(3-methoxy-4-hydroxyphenyl)propane, 1,1-bis(3-tert-butyl-4-hydroxyphenyl)propane, 2,2-bis(3,5-dimethyl-4-hydroxyphenyl)propane, 2,2-bis(3-cyclohexyl-4-hydroxyphenyl)propane, 2-(4-hydroxyphenyl)-2-(3-cyclohexyl-4-hydroxyphenyl)propane, $\alpha,\alpha'$-bis(4-hydroxyphenyl)-1,4-diisopropylbenzene, 1,3-bis[2-(4-hydroxyphenyl)-2-propyl]benzene, bis(4-hydroxyphenyl)methane, bis (4-hydroxyphenyl) cyclohexylmethane, bis(4-hydroxyphenyl)phenylmethane, bis(4-hydroxyphenyl) (4-propenylphenyl)methane, bis(4-hydroxyphenyl)diphenylmethane, bis(4-hydroxyphenyl)naphthylmethane, 1,1-bis(4-hydroxyphenyl)ethane, 1,1-bis(4-hydroxyphenyl)-1-phenylethane, 1,1-bis(4-hydroxyphenyl)-1-naphthylethane, 1,1-bis(4-hydroxyphenyl)butane, 2,2-bis(4-hydroxyphenyl)butane, 2,2-bis(4-hydroxyphenyl)pentane, 1,1-bis(4-hydroxyphenyl)hexane, and 2,2-bis(4-hydroxyphenyl)hexane;

bis(hydroxyaryl)cycloalkanes such as 1,1-bis(4-hydroxyphenyl)cyclopentane, 1,1-bis(4-hydroxyphenyl)cyclohexane, 1,1-bis(4-hydroxyphenyl)-3,3-dimethylcyclohexane, 1,1-bis(4-hydroxyphenyl)-3,4-dimethylcyclohexane, 1,1-bis(4-hydroxyphenyl)-3,5-dimethylcyclohexane, 1,1-bis(4-hydroxyphenyl)-3,3,5-trimethylcyclohexane, 1,1-bis(4-hydroxy-3,5-dimethylphenyl)-3,3,5-trimethylcyclohexane, 1,1-bis(4-hydroxyphenyl)-3-propyl-5-methylcyclohexane, 1,1-bis(4-hydroxyphenyl)-3-tert-butyl-cyclohexane, 1,1-bis(4-hydroxyphenyl)-4-*tert*-butyl-cyclohexane, 1,1-bis(4-hydroxyphenyl)-3-phenylcyclohexane, and 1,1-bis(4-hydroxyphenyl)-4-phenylcyclohexane;
cardo structure-containing bisphenols such as 9,9-bis(4-hydroxyphenyl)fluorene and 9,9-bis(4-hydroxy-3-methylphenyl)fluorene;
dihydroxydiaryl sulfides such as 4,4'-dihydroxydiphenyl sulfide and 4,4'-dihydroxy-3,3'-dimethyldiphenyl sulfide; dihydroxydiaryl sulfoxides such as 4,4'-dihydroxydiphenyl sulfoxide and 4,4'-dihydroxy-3,3'-dimethyldiphenyl sulfoxide; and dihydroxydiaryl sulfones such as 4,4'-dihydroxydiphenyl sulfone and 4,4'-dihydroxy-3,3'-dimethyldiphenyl sulfone.

Among these, bis(hydroxyaryl)alkanes are preferred, and bis(4-hydroxyphenyl)alkanes are more preferred. In particular, from the viewpoint of impact resistance and heat resistance, 2,2-bis(4-hydroxyphenyl)propane (that is, bisphenol A) is preferred.

A single type of aromatic dihydroxy compound may be used, or two or more types of aromatic dihydroxy compounds may be used in an arbitrary combination at arbitrary ratios.

Regarding the monomers used as a material of the aromatic polycarbonate resin (A) of the present invention, examples of the carbonate-forming compound include carbonyl halides and carbonate esters. A single type of carbonate-forming compound may be used, or two or more types of carbonate-forming compounds may be used in an arbitrary combination at arbitrary ratios.

Specific examples of the carbonyl halides include phosgene; haloformates such as bischloroformate bodies of dihydroxy compounds, and monochloroformate bodies of dihydroxy compounds.

Specific examples of the carbonate esters include diaryl carbonates such as diphenyl carbonate and ditolyl carbonate; dialkyl carbonates such as dimethyl carbonate and diethyl carbonate; and biscarbonate bodies of dihydroxy compounds, monocarbonate bodies of dihydroxy compounds, and carbonate bodies of dihydroxy compounds such as cyclic carbonates.

Method for Producing Aromatic Polycarbonate Resin (A)

The method for producing the aromatic polycarbonate resin (A) used in the present invention is not limited, and an arbitrary method may be employed therefor. Examples of the method include interfacial polymerization, melt transesterification, pyridine method, ring-opening polymerization of cyclic carbonate compounds, and solid-phase transesterification of prepolymers. Preferred methods among these are concretely described below.

Interfacial Polymerization

First, a case where the aromatic polycarbonate resin is produced by interfacial polymerization is described. In the interfacial polymerization, the pH is usually maintained at not less than 9 in the presence of an organic solvent inert to the reaction, and an aqueous alkali solution. After reacting an aromatic dihydroxy compound with a carbonate-forming compound (preferably phosgene), interfacial polymerization is carried out in the presence of a polymerization catalyst to obtain an aromatic polycarbonate resin. If necessary, in the reaction system, a molecular weight modifier (terminating agent) may be allowed to be present, and, for prevention of oxidation of the aromatic dihydroxy compound, an antioxidant may be allowed to present.

The aromatic dihydroxy compound and the carbonate-forming compound are as described above. Among carbonate-forming compounds, phosgene is preferably used. In cases where phosgene is used, the method is specifically called the phosgene method.

Examples of the organic solvent inert to the reaction include chlorinated hydrocarbons such as dichloromethane, 1,2-dichloroethane, chloroform, monochlorobenzene, and dichlorobenzene; and aromatic hydrocarbons such as benzene, toluene, and xylene. A single type of organic solvent may be used, or two or more types of organic solvents may be used in an arbitrary combination at arbitrary ratios.

Examples of the alkali compound contained in the aqueous alkali solution include alkali metal compounds such as sodium hydroxide, potassium hydroxide, lithium hydroxide, and sodium hydrogen carbonate; and alkaline earth metal compounds. Sodium hydroxide and potassium hydroxide are especially preferred. A single type of alkali compound may be used, or two or more types of alkali compounds may be used in an arbitrary combination at arbitrary ratios.

The concentration of the alkali compound in the aqueous alkali solution is not limited. The alkali compound is usually used in an amount of 5 to 10% by mass for the purpose of controlling the pH of the aqueous alkali solution to 10 to 12 for the reaction. In cases where phosgene is blown, for controlling the pH of the aqueous phase to 10 to 12, preferably 10 to 11, the molar ratio between the bisphenol compound and the alkali compound is preferably adjusted to usually 1:1.9 or more, especially 1:2.0 or more, and usually 1:3.2 or less, especially 1:2.5 or less.

Examples of the polymerization catalyst include aliphatic tertiary amines such as trimethylamine, triethylamine, tributylamine, tripropylamine, and trihexylamine; alicyclic tertiary amines such as *N,N'*-dimethylcyclohexylamine and *N,N'*-diethylcyclohexylamine; aromatic tertiary amines such as N,N'-dimethylaniline and *N,N'*-diethylaniline; quaternary

ammonium salts such as trimethylbenzylammonium chloride, tetramethylammonium chloride, and triethylbenzylammonium chloride; pyridine; guanine; and salts of guanidine. A single type of polymerization catalyst may be used, or two or more types of polymerization catalysts may be used in an arbitrary combination at arbitrary ratios.

Examples of the molecular weight modifier include aromatic phenols having a monovalent phenolic hydroxyl group; aliphatic alcohols such as methanol and butanol; mercaptan; and phthalic imide. Aromatic phenols are especially preferred. Specific examples of such aromatic phenols include alkyl-substituted phenols such as m-methylphenol, p-methylphenol, m-propylphenol, p-propylphenol, *p-tert*-butylphenol, and p-long-chain alkyl-substituted phenols; vinyl-containing phenols such as isopropanylphenol; epoxy-containing phenols; and carboxyl-containing phenols such as o-hydroxybenzoic acid and 2-methyl-6-hydroxyphenylacetic acid. A single type of molecular weight modifier may be used, or two or more types of molecular weight modifiers may be used in an arbitrary combination at arbitrary ratios.

The amount of the molecular weight modifier used is usually not less than 0.5 mole, preferably not less than 1 mole, and usually not more than 50 moles, preferably not more than 30 moles, with respect to 100 moles of the aromatic dihydroxy compound. In cases where the amount of the molecular weight modifier is within this range, thermal stability and hydrolysis resistance of the thermoplastic resin composition can be increased.

In the reaction, a reaction substrate(s), reaction medium/media, catalyst (s), additive(s), may be mixed in an arbitrary order as long as a desired polycarbonate resin can be obtained. An appropriate order may be arbitrarily set. For example, in cases where phosgene is used as the carbonate-forming compound, a molecular weight modifier may be mixed at an arbitrary timing between the reaction of the aromatic dihydroxy compound with phosgene (phosgenation) and the beginning of the polymerization reaction.

The reaction temperature is usually 0 to 40°C, and the reaction time is usually several minutes (for example, 10 minutes) to several hours (for example, 6 hours).

Melt Transesterification

A case where the aromatic polycarbonate resin is produced by melt transesterification is described below. In the melt transesterification, transesterification reaction between, for example, a diester carbonate and a dihydroxy compound is performed.

The aromatic dihydroxy compound is as described above.

On the other hand, examples of the diester carbonate include dialkyl carbonate compounds such as dimethyl carbonate, diethyl carbonate, and di-tert-butyl carbonate; diphenyl carbonate; and substituted diphenyl carbonates such as ditolyl carbonate. Among these, diphenyl carbonate and substituted diphenyl carbonates are preferred. Diphenyl carbonates are more preferred. A single type of diester carbonate may be used, or two or more types of diester carbonates may be used in an arbitrary combination at arbitrary ratios.

The ratio between the aromatic dihydroxy compound and the diester carbonate is not limited as long as a desired polycarbonate resin can be obtained. The amount of the diester carbonate used is preferably not less than an equimolar amount, more preferably not less than 1.01 moles, with respect to 1 mole of the aromatic dihydroxy compound. The upper limit is usually 1.30 moles. In cases where the ratio is within this range, the amount of terminal hydroxyl groups can be adjusted to within a preferred range.

In an aromatic polycarbonate resin, the amount of its terminal hydroxyl groups tends to have a significant influence on the thermal stability, hydrolytic stability, and color tone. Thus, the amount of terminal hydroxyl groups may be adjusted by an arbitrary known method, if necessary. In the transesterification reaction, an aromatic polycarbonate resin having a controlled amount of terminal hydroxyl groups can be usually obtained by controlling the mixing ratio between the diester carbonate and the aromatic dihydroxy compound, the degree of pressure reduction during the transesterification reaction. This operation usually also enables control of the molecular weight of the aromatic polycarbonate resin obtained.

In cases where the amount of terminal hydroxyl groups is controlled by the control of the mixing ratio between the diester carbonate and the aromatic dihydroxy compound, the mixing ratio is as described above.

Examples of more positive control methods include a method in which a terminating agent is separately mixed during the reaction. Examples of the terminating agent in this process include monovalent phenols, monovalent carboxylic acids, and diester carbonates. A single type of terminating agent may be used, or two or more types of terminating agents may be used in an arbitrary combination at arbitrary ratios.

Usually, in cases where the aromatic polycarbonate resin is produced by melt transesterification, a transesterification catalyst is used. An arbitrary transesterification catalyst may be used. In particular, an alkali metal compound(s) and/or an alkaline earth metal compound(s) is/are preferably used. In addition, a basic compound(s) such as a basic boron compound(s), basic phosphorus compound(s), basic ammonium compound(s), and/or amine compound(s) may be supplementarily used in combination. A single type of transesterification catalyst may be used, or two or more types of transesterification catalysts may be used in an arbitrary combination at arbitrary ratios.

In the melt transesterification, the reaction temperature is usually 100 to 320°C. The reaction is usually carried

out under a reduced pressure of not more than 2 mmHg. More specifically, the operation may be carried out by allowing melt polycondensation reaction to proceed under the above conditions while removing byproducts such as aromatic hydroxy compounds.

The melt polycondensation reaction may be carried out by either a batch method or a continuous method. In cases where the reaction is carried out by a batch method, a reaction substrate(s), reaction medium/media, catalyst (s), additive(s), may be mixed in an arbitrary order as long as a desired aromatic polycarbonate resin can be obtained. An appropriate order may be arbitrarily set. In particular, taking into account the stability of the aromatic polycarbonate resin and the thermoplastic resin composition, the melt polycondensation reaction is preferably carried out by a continuous method.

In the melt transesterification, a catalyst deactivator may be used, if necessary. As the catalyst deactivator, a compound that neutralizes the transesterification catalyst may be arbitrarily used. Examples of the catalyst deactivator include sulfur-containing acidic compounds and derivatives thereof. A single type of catalyst deactivator may be used, or two or more types of catalyst deactivators may be used in an arbitrary combination at arbitrary ratios.

The amount of the catalyst deactivator used is usually not less than 0.5 equivalent, preferably not less than 1 equivalent, and usually not more than 10 equivalents, preferably not more than 5 equivalents, with respect to the alkali metal or alkaline earth metal contained in the transesterification catalyst. Further, the amount of the catalyst deactivator is usually not less than 1 ppm, and usually not more than 100 ppm, preferably not more than 20 ppm, with respect to the aromatic polycarbonate resin.

Viscosity Average Molecular Weight of Aromatic Polycarbonate Resin (A)

The viscosity average molecular weight [Mv] as calculated from the solution viscosity of the aromatic polycarbonate resin (A) used in the present invention is usually 10,000 to 15,000. In cases where the viscosity average molecular weight is not less than the lower limit of this range, the mechanical strength of the polycarbonate resin composition for a thin optical component of the present invention can be further increased, and therefore the strength of the thin optical component such as a light guide plate obtained by molding of the composition can be increased, so that the component becomes less likely to be cracked. In cases where the viscosity average molecular weight is not more than the upper limit of this range, a decrease in the fluidity of the polycarbonate resin composition for a thin optical component of the present invention can be suppressed, so that the moldability can be increased. From such a point of view, the viscosity average molecular weight [Mv] of the aromatic polycarbonate resin (A) is preferably not less than 10,500, more preferably not less than 11,000, and preferably not more than 14,500, more preferably not more than 14,000, still more preferably not more than 13,500, especially preferably not more than 13,000.

Two or more kinds of aromatic polycarbonate resins having different viscosity average molecular weights may be used as a mixture. In such a case, an aromatic polycarbonate resin having a viscosity average molecular weight that is outside the preferred range may be mixed.

In the present invention, the viscosity average molecular weight [Mv] means a value calculated by determining the limiting viscosity [$\eta$] (unit, dl/g) at a temperature of 20°C using an Ubbelohde viscometer with methylene chloride as a solvent, and applying the resulting value to the Schnell's viscosity equation, that is, $\eta=1.23\times10^{-4}\ Mv^{0.83}$. The limiting viscosity [$\eta$] is a value obtained by measuring the specific viscosity [$\eta_{sp}$] at each solution concentration [C] (g/dl) and applying the resulting value to the following equation.

$$\eta = \lim_{c\to 0} \eta_{sp}/c$$

The concentration of terminal hydroxyl groups in the polycarbonate resin (A) is arbitrary, and may be appropriately selected. It is usually not more than 1000 ppm, preferably not more than 800 ppm, more preferably not more than 600 ppm. By this, the residence heat stability of the polycarbonate resin composition for a thin optical component of the present invention can be further increased. Regarding the lower limit, the residence heat stability is usually not less than 10 ppm, preferably not less than 30 ppm, more preferably not less than 40 ppm. By this, a decrease in the molecular weight can be suppressed, and the color tone of the polycarbonate resin composition for a thin optical component of the present invention can be further improved.

The terminal hydroxyl group concentration is represented by the mass, expressed in ppm units, of the terminal hydroxyl groups with respect to the mass of the aromatic polycarbonate resin. For the measurement, colorimetry by the titanium tetrachloride/acetic acid method (the method described in Macromol. Chem. 88 215 (1965)) is used.

[Aromatic Polycarbonate Copolymer (B)]

The polycarbonate resin composition for a thin optical component of the present invention contains an aromatic polycarbonate copolymer (B) composed of a carbonate structural unit (i) represented by the following Formula (1) and a carbonate structural unit (ii) represented by the following Formula (2). By blending such an aromatic polycarbonate copolymer (B) with the aromatic polycarbonate resin (A), a remarkably favorable balance among the fluidity, moldability, and strengths such as the impact strength, bending strength, and cyclic fatigue strength of the polycarbonate resin composition for a thin optical component of the present invention can be achieved, so that a thin optical component which is less likely to be cracked upon molding and has high strength can be obtained.

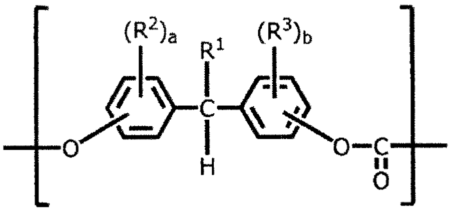
(1)

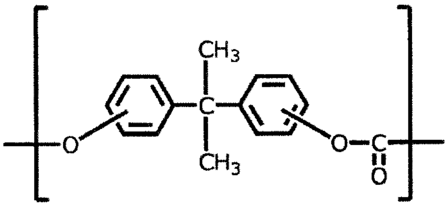
(2)

In Formula (1), $R^1$ represents $C_8$-$C_{24}$ alkyl or alkenyl. By having such an aliphatic hydrocarbon chain-containing substituent such as an alkyl group or alkenyl group having eight or more carbon atoms, when the aromatic polycarbonate copolymer (B) is blended with the aromatic polycarbonate resin (A) to prepare a polycarbonate resin composition for a thin optical component, entangling of polymer chains of the aromatic polycarbonate resin during melting can be moderately inhibited to reduce friction between the polymer chains, so that high fluidity can be achieved. From such a point of view, the carbon number of the alkyl group or alkenyl group in $R^1$ in the Formula (1) is more preferably not less than 9, still more preferably not less than 10, especially preferably not less than 11. On the other hand, the carbon number of the alkyl group or alkenyl group in $R^1$ in the carbonate structural unit of the Formula (1) is not more than 24. In cases where the long-chain aliphatic chain is too long, heat resistance and mechanical properties are remarkably low, and compatibility with the polycarbonate resin (A) is low, so that mechanical properties and transparency may be deteriorated, which is not preferred. From such a point of view, the carbon number of the $R^1$ is more preferably not more than 22, still more preferably not more than 18, especially preferably not more than 16.

Examples of the $C_8$-$C_{24}$ alkyl include linear or branched alkyl groups, and alkyl groups partially having a cyclic structure. In particular, for effective enhancement of fluidity of the aromatic polycarbonate resin of the present invention, the $C_8$-$C_{24}$ alkyl is preferably a linear or branched alkyl group.

Specific examples of the linear alkyl groups include *n*-octyl, *n*-nonyl, *n*-decyl, *n*-undecyl, *n*-dodecyl, *n*-tridecyl, *n*-tetradecyl, *n*-pentadecyl, *n*-hexadecyl, *n*-heptadecyl, *n*-octadecyl, *n*-nonadecyl, *n*-icosyl, *n*-icosyl, *n*-henicosyl, *n*-docosyl, *n*-tricosyl, and *n*-tetracosyl. *n*-Nonyl, *n*-decyl, *n*-undecyl, *n*-dodecyl, *n*-hexadecyl, and *n*-octadecyl are preferred. *n*-Nonyl, *n*-decyl, *n*-undecyl, and *n*-dodecyl are more preferred. *n*-Dodecyl is especially preferred. By the presence of such an alkyl group, fluidity and impact resistance of the aromatic polycarbonate resin composition of the present invention can be more effectively increased.

Specific examples of the branched alkyl groups include methylheptyl, methyloctyl, methylnonyl, methyldecyl, methylundecyl, methyldodecyl, methyltridecyl, methyltetradecyl, methylpentadecyl, methylhexadecyl, methylheptadecyl, methyloctadecyl, methylnonadecyl, methylicosyl, methylicosyl, methylhenicosyl, methyldocosyl, methyltricosyl,
dimethylheptyl, dimethyloctyl, dimethylnonyl, dimethyldecyl, dimethylundecyl, dimethyldodecyl, dimethyltridecyl, dimethyltetradecyl, dimethylpentadecyl, dimethylhexadecyl, dimethylheptadecyl, dimethyloctadecyl, dimethylnonadecyl, dimethylicosyl, dimethylicosyl, dimethylhenicosyl, dimethyldocosyl,
trimethylheptyl, trimethyloctyl, trimethylnonyl, trimethyldecyl, trimethylundecyl, trimethyldodecyl, trimethyltridecyl, trimethyltetradecyl, trimethylpentadecyl, trimethylhexadecyl, trimethylheptadecyl, trimethyloctadecyl, trimethylnonadecyl, trimethylicosyl, trimethylicosyl, trimethylhenicosyl,
ethylhexyl, ethylheptyl, ethyloctyl, ethylnonyl, ethyldecyl, ethylundecyl, ethyldodecyl, ethyltridecyl, ethyltetradecyl, ethylpentadecyl, ethylhexadecyl, ethylheptadecyl, ethyloctadecyl, ethylnonadecyl, ethylicosyl, ethylicosyl, ethylhenicosyl,

ethyldocosyl,
propylhexyl, propylheptyl, propyloctyl, propylnonyl, propyldecyl, propylundecyl, propyldodecyl, propyltridecyl, propyltetradecyl, propylpentadecyl, propylhexadecyl, propylheptadecyl, propyloctadecyl, propylnonadecyl, propylicosyl, propylicosyl, propylhenicosyl,
butylhexyl, butylheptyl, butyloctyl, butylnonyl, butyldecyl, butylundecyl, butyldodecyl, butyltridecyl, butyltetradecyl, butylpentadecyl, butylhexadecyl, butylheptadecyl, butyloctadecyl, butylnonadecyl, butylicosyl, and butylicosyl.

In the above examples of branched alkyl groups, the position(s) of branching is/are arbitrary.

The alkenyl group is not limited as long as it has a structure wherein one or more carbon-carbon double bonds are included in the structure of a linear alkyl group or branched alkyl group described above. Specific examples of the alkenyl group include octenyl, nonenyl, decenyl, undecenyl, dodecenyl, tridecenyl, tetradecenyl, pentadecenyl, hexadecenyl, heptadecenyl, octadecenyl, nonadecenyl, icosenyl, henicosenyl, docosenyl, tricosenyl, tetracosenyl, and 4,8,12-trimethyltridecyl.

$R^2$ and $R^3$ in the carbonate structural unit (i) of Formula (1) represent $C_1$-$C_{15}$ monovalent hydrocarbon groups. By having the $C_1$-$C_{15}$ monovalent hydrocarbon groups, the aromatic polycarbonate resin composition for a thin optical component of the present invention can have increased fluidity, strength, hardness, chemical resistance. Preferred examples of the $C_1$-$C_{15}$ monovalent hydrocarbon groups include $C_1$-$C_{15}$ alkyl groups and $C_2$-$C_{15}$ alkenyl groups. These may be linear, branched, or cyclic. Examples of such monovalent hydrocarbon groups include methyl, ethyl, propyl, isopropyl, *n*-butyl, isobutyl, *sec*-butyl, *tert*-butyl, pentyl, *n*-hexyl, cyclohexyl, *n*-heptyl, *n*-octyl, *n*-nonyl, *n*-decyl, *n*-undecyl, *n*-dodecyl, *n*-tridecyl, *n*-tetradecyl, *n*-pentadecyl, phenyl, and tolyl. Among these, methyl is preferred.

a and b in the carbonate structural unit (i) each independently represent an integer of 0 to 4, preferably 0 to 2, more preferably 0 or 1, still more preferably 0.

Specific examples of the carbonate structural unit (i) include the structural units represented by the following Formulae (3) to (12). Among these, the structural units of Formulae (3) to (10) are more preferred; the structural units of Formulae (4) to (7) are still more preferred; the structural units of Formulae (4) and (6) are especially preferred; and the structural unit of Formula (6) is most preferred.

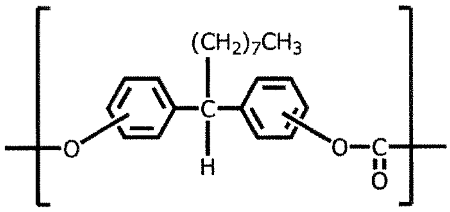
(3)

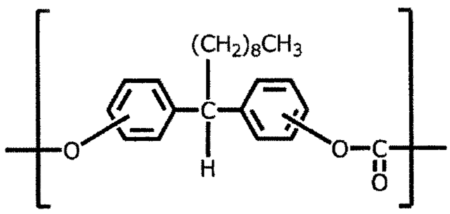
(4)

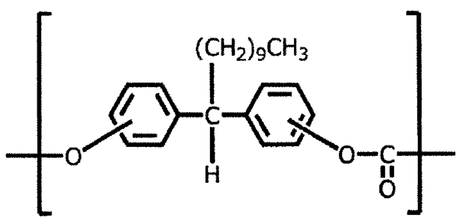
(5)

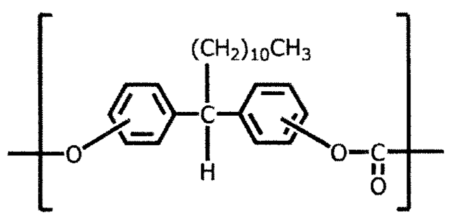
(6)

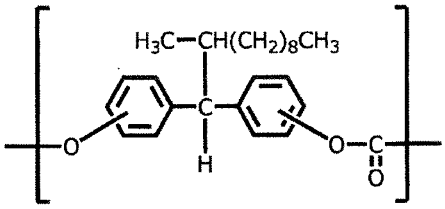

(7)

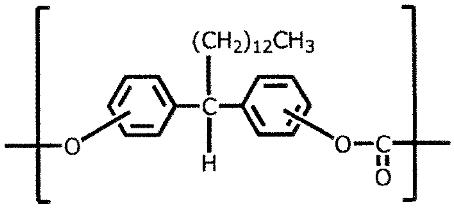

(8)

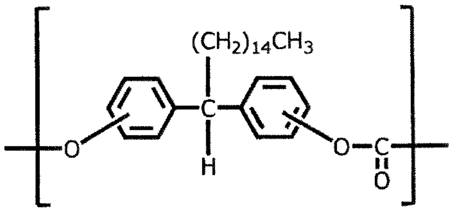

(9)

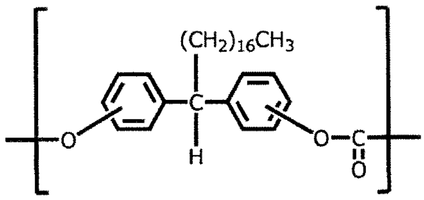

(10)

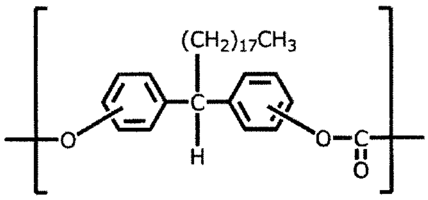

(11)

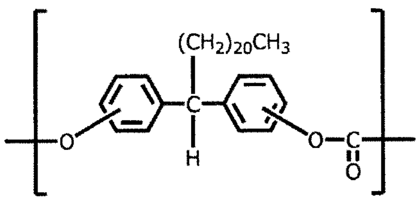

(12)

Specific examples of the carbonate structural unit (i) represented by the Formula (1) in the aromatic polycarbonate copolymer (B) contained in the polycarbonate resin composition for a thin optical component of the present invention include the structural units represented by the following Formulae (13) to (15). Among these, the structural unit represented by Formula (13) is more preferred since it tends to increase the thermal stability. However, the isomeric structures of Formulae (14) and (15) may also be included at arbitrary ratios.

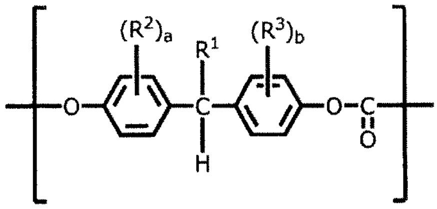

(13)

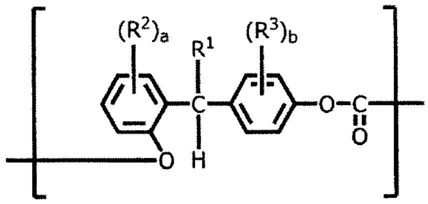

(14)

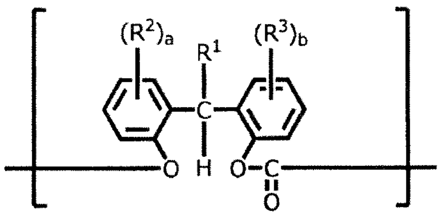

(15)

From such a point of view, more preferred specific examples of the carbonate structure (i) include the structural units represented by the following Formulae (16) to (25). Among these, the structural units of Formulae (16) to (23) are more preferred; the structural units of Formulae (17) to (20) are still more preferred; the structural units of Formulae (17) and (19) are especially preferred; and the structural unit of Formula (19) is most preferred.

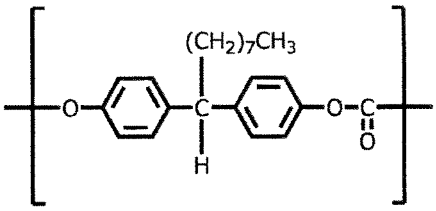

(16)

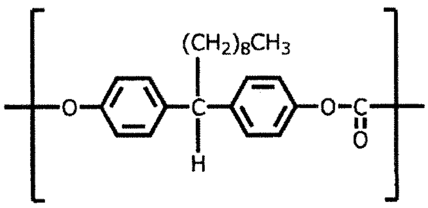

(17)

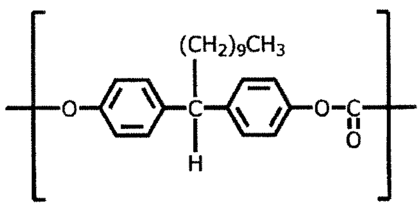

(18)

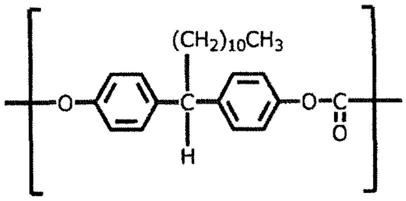

(1 9)

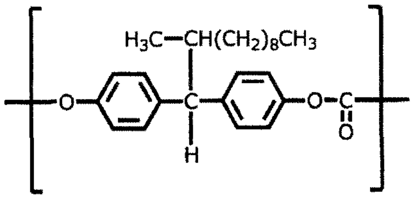

(2 0)

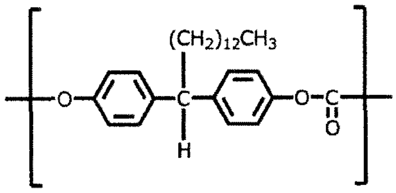

(2 1)

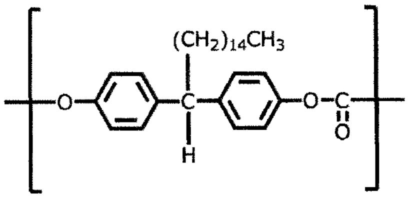

(2 2)

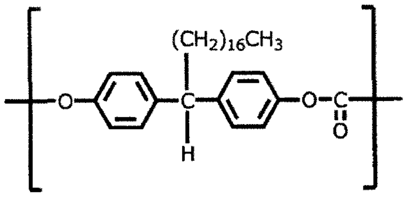

(2 3)

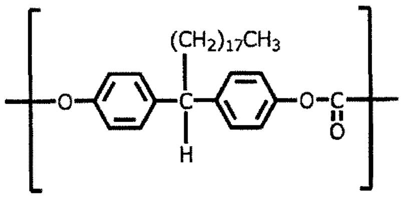

(2 4)

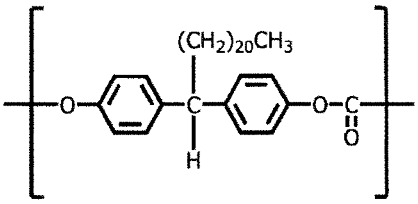

(2 5)

The carbonate structural unit (ii) represented by the Formula (2) in the aromatic polycarbonate copolymer (B) in the polycarbonate resin composition for a thin optical component of the present invention is preferably the bisphenol

A-derived structural unit represented by the following Formula (26). However, the isomeric structural unit represented by Formula (27) may also be included at an arbitrary ratio.

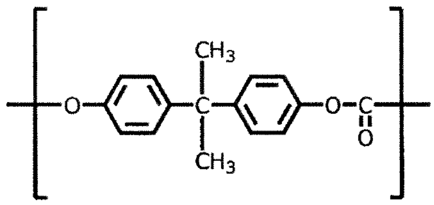

(26)

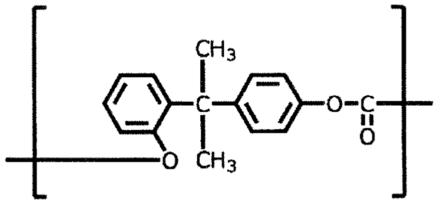

(27)

In the aromatic polycarbonate copolymer (B) contained in the polycarbonate resin composition for a thin optical component of the present invention, the ratio of the carbonate structural unit (i) represented by Formula (1) is more than 10 mol% and less than 39 mol% with respect to a total of 100 mol% of the carbonate structural unit (i) represented by the Formula (1) and the carbonate structural unit (ii) represented by the Formula (2) in the aromatic polycarbonate copolymer (B). The ratio of the carbonate structural unit represented by the Formula (1) is preferably not less than 12 mol%, more preferably not less than 14 mol%, still more preferably not less than 16 mol%, especially preferably not less than 18 mol%, most preferably not less than 22 mol%. Further, the ratio is preferably not more than 38.5 mol%, more preferably not more than 38 mol%, still more preferably not more than 37.5 mol%, especially preferably not more than 37 mol%, most preferably not more than 36.5 mol%.

Molecular Weight of Aromatic Polycarbonate Copolymer (B)

The molecular weight of the aromatic polycarbonate copolymer (B) contained in the polycarbonate resin composition for a thin optical component of the present invention is not limited, and usually 5000 to 50,000 in terms of the viscosity average molecular weight (Mv) as calculated from the solution viscosity. In cases where the viscosity average molecular weight is less than the lower limit, the mechanical properties of the polycarbonate resin composition for a thin optical component of the present invention are likely to be poor, and the aromatic polycarbonate copolymer (B) tends to cause bleeding. In cases where the viscosity average molecular weight exceeds the upper limit, the fluidity tends to be insufficient, which is not preferred. From such a point of view, the viscosity average molecular weight (Mv) of the aromatic polycarbonate copolymer (B) is preferably not less than 9,000, more preferably not less than 10,000, still more preferably not less than 11,000, and preferably not more than 30,000, more preferably not more than 25,000, still more preferably not more than 20,000, especially preferably not more than 18,000.

The definition and the measurement method for the viscosity average molecular weight (Mv) of the aromatic polycarbonate copolymer (B) are the same as those for the viscosity average molecular weight (Mv) of the aromatic polycarbonate resin (A) described above.

Amount of Terminal Hydroxyl Groups in Aromatic Polycarbonate Copolymer (B)

The amount of terminal hydroxyl groups in the aromatic polycarbonate copolymer (B) contained in the polycarbonate resin composition for a thin optical component of the present invention is not limited, and usually 10 to 2000 ppm. The amount is preferably not less than 20 ppm, more preferably not less than 50 ppm, still more preferably not less than 100 ppm. On the other hand, the amount is preferably not more than 1500 ppm, more preferably not more than 1000 ppm, still more preferably not more than 700 ppm. In cases where the amount of terminal hydroxyl groups is not less than the lower limit of this range, the hue and the productivity of the aromatic polycarbonate copolymer (B) of the present invention can be further improved. In cases where the amount is not more than the upper limit of this range, the thermal stability and the moist heat stability of the polycarbonate resin composition for a thin optical component of the present invention can be further improved.

The unit of the terminal hydroxyl group concentration is the same as in the measurement method and the definition for the terminal hydroxyl groups in the aromatic polycarbonate resin (A) described above.

Method for Producing Aromatic Polycarbonate Copolymer (B)

The aromatic polycarbonate copolymer (B) is obtained by polycondensation of an aromatic dihydroxy compound(s) necessary for forming the carbonate structures with a carbonate-forming compound(s). Examples of the aromatic dihydroxy compound necessary for forming the carbonate structural unit (i) include the aromatic dihydroxy compounds represented by the following Formula (28).

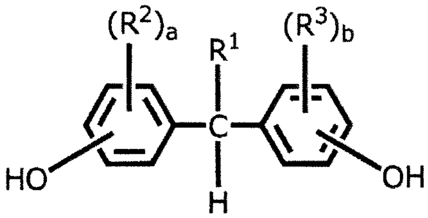

(2 8)

Specific examples of the aromatic dihydroxy compound necessary for forming the carbonate structural unit (i) include the aromatic dihydroxy compounds represented by the following Formulae (29) to (31). Among these, the aromatic dihydroxy compounds represented by Formula (29) are more preferred since they tend to increase the thermal stability. However, the aromatic dihydroxy compounds of Formulae (30) and (31) may also be included at arbitrary ratios.

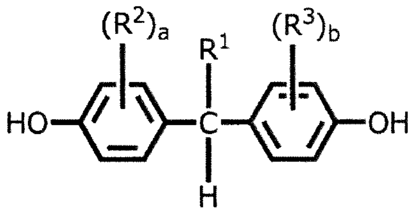

(2 9)

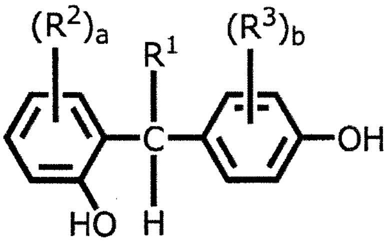

(3 0)

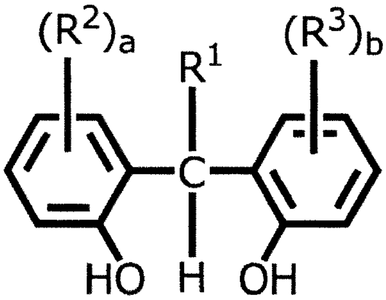

(3 1)

In Formulae (28) to (31), the definitions and preferred examples of $R^1$, $R^2$, $R^3$, a, and b are the same as those of the carbonate structural unit (i) represented by the Formula (1). From such a point of view, more preferred specific examples of the aromatic dihydroxy compound necessary for forming the carbonate structural unit (i) include the following:

1,1-bis(4-hydroxyphenyl)octane, 1,1-bis(2-hydroxyphenyl)octane, 1-(2-hydroxyphenyl)-1-(4-hydroxyphenyl)octane, 1,1-bis(4-hydroxyphenyl)nonane, 1,1-bis(2-hydroxyphenyl)nonane, 1-(2-hydroxyphenyl)-1-(4-hydroxyphenyl)nonane, 1,1-bis(4-hydroxyphenyl)decane, 1,1-bis(2-hydroxyphenyl)decane, 1-(2-hydroxyphenyl)-1-(4-hydroxyphenyl)decane, 1,1-bis(4-hydroxyphenyl)undecane, 1,1-bis(2-hydroxyphenyl)undecane, 1-(2-hydroxyphenyl)-1-(4-hydroxyphenyl)undecane, 1,1-bis(4-hydroxyphenyl)dodecane, 1,1-bis(2-hydroxyphenyl)dodecane, 1-(2-hydroxyphenyl)-1-(4-hydroxyphenyl)dodecane, 1,1-bis(4-hydroxyphenyl)tridecane, 1,1-bis(2-hydroxyphenyl)tridecane, 1-(2-hydroxyphenyl)-1-(4-hydroxyphenyl)tridecane, 1,1-bis(4-hydroxyphenyl)tetradecane, 1,1-bis(2-hydroxyphenyl)tetradecane, 1-(2-hydroxyphenyl)-1-(4-hydroxyphenyl)tetradecane, 1,1-bis(4-hydroxyphenyl)pentadecane, 1,1-bis(2-hydroxyphenyl)pentadecane, 1-(2-hydroxyphenyl)-1-(4-hydroxyphenyl)pentadecane, 1,1-bis(4-hydroxyphenyl)hexadecane, 1,1-bis(2-hydroxyphenyl)hexadecane, 1-(2-hydroxyphenyl)-1-(4-hydroxyphenyl)hexadecane, 1,1-bis(4-hydroxyphenyl)heptadecane, 1,1-bis(2-hydroxyphenyl)heptadecane, 1-(2-hydroxyphenyl)-1-(4-hydroxyphenyl)heptadecane, 1,1-bis(4-hydroxyphenyl)octadecane, 1,1-bis(2-hydroxyphenyl)octadecane, 1-(2-hydroxyphenyl)-1-(4-hydroxyphenyl)octadecane, 1,1-bis(4-hydroxyphenyl)nonadecane, 1,1-bis(2-hydroxyphenyl)nonadecane, 1-(2-hydroxyphenyl)-1-(4-hydroxyphenyl)nonadecane,
1,1-bis(4-hydroxyphenyl)icosane, 1,1-bis(2-hydroxyphenyl)icosane, 1-(2-hydroxyphenyl)-1-(4-hydroxyphenyl)icosane, 1,1-bis(4-hydroxyphenyl)henicosane, 1,1-bis(2-hydroxyphenyl)henicosane, 1-(2-hydroxyphenyl)-1-(4-hydroxyphenyl)henicosane, 1,1-bis(4-hydroxyphenyl)docosane, 1,1-bis(2-hydroxyphenyl)docosane, 1-(2-hydroxyphenyl)-1-(4-hydroxyphenyl)docosane, 1,1-bis(4-hydroxyphenyl)tricosane, 1,1-bis(2-hydroxyphenyl)tricosane, 1-(2-hydroxyphenyl)-1-(4-hydroxyphenyl)tricosane, 1,1-bis(4-hydroxyphenyl)tetracosane, 1,1-bis(2-hydroxyphenyl)tetracosane, 1-(2-hydroxyphenyl)-1-(4-hydroxyphenyl)tetracosane, 1,1-bis(3-methyl-4-hydroxyphenyl)octane, 1,1-bis(2-hydroxy-3-methylphenyl)octane, 1-(2-hydroxy-3-methyl-phenyl)-1-(3-methyl-4-hydroxyphenyl)octane, 1,1-bis(3-methyl-4-hydroxyphenyl)nonane, 1,1-bis(2-hydroxy-3-methylphenyl)nonane, 1-(2-hydroxy-3-methyl-phenyl)-1-(3-methyl-4-hydroxyphenyl)nonane, 1,1-bis(3-methyl-4-hydroxyphenyl)decane, 1,1-bis(2-hydroxy-3-methylphenyl)decane, 1-(2-hydroxy-3-methyl-phenyl)-1-(3-methyl-4-hydroxyphenyl)decane, 1,1-bis(3-methyl-4-hydroxyphenyl)undecane, 1,1-bis(2-hydroxy-3-methylphenyl)undecane, 1-(2-hydroxy-3-methyl-phenyl)-1-(3-methyl-4-hydroxyphenyl)undecane, 1,1-bis(3-methyl-4-hydroxyphenyl)dodecane, 1,1-bis(2-hydroxy-3-methylphenyl)dodecane, 1-(2-hydroxy-3-methyl-phenyl)-1-(3-methyl-4-hydroxyphenyl)dodecane, 1,1-bis(3-methyl-4-hydroxyphenyl)tridecane, 1,1-bis(2-hydroxy-3-methylphenyl)tridecane, 1-(2-hydroxy-3-methyl-phenyl)-1-(3-methyl-4-hydroxyphenyl)tridecane, 1,1-bis(3-methyl-4-hydroxyphenyl)tetradecane, 1,1-bis(2-hydroxy-3-methylphenyl)tetradecane, 1-(2-hydroxy-3-methyl-phenyl)-1-(3-methyl-4-hydroxyphenyl)tetradecane,
1,1-bis(3-methyl-4-hydroxyphenyl)pentadecane, 1,1-bis(2-hydroxy-3-methylphenyl)pentadecane, 1-(2-hydroxy-3-methyl-phenyl)-1-(3-methyl-4-hydroxyphenyl)pentadecane, 1,1-bis(3-methyl-4-hydroxyphenyl)hexadecane, 1,1-bis(2-hydroxy-3-methylphenyl)hexadecane, 1-(2-hydroxy-3-methylphenyl)-1-(3-methyl-4-hydroxyphenyl)hexadecane, 1,1-bis(3-methyl-4-hydroxyphenyl)heptadecane, 1,1-bis(2-hydroxy-3-methylphenyl)heptadecane, 1-(2-hydroxy-3-methyl-phenyl)-1-(3-methyl-4-hydroxyphenyl)heptadecane, 1,1-bis(3-methyl-4-hydroxyphenyl)octadecane, 1,1-bis(2-hydroxy-3-methylphenyl)octadecane, 1-(2-hydroxy-3-methylphenyl)-1-(3-methyl-4-hydroxyphenyl)octadecane, 1,1-bis(3-methyl-4-hydroxyphenyl)nonadecane, 1,1-bis(2-hydroxy-3-methylphenyl)nonadecane, 1-(2-hydroxy-3-methylphenyl)-1-(3-methyl-4-hydroxyphenyl)nonadecane, 1,1-bis(3-methyl-4-hydroxyphenyl)icosane, 1,1-bis(2-hydroxy-3-methylphenyl)icosane, 1-(2-hydroxy-3-methyl-phenyl)-1-(3-methyl-4-hydroxyphenyl)icosane, 1,1-bis(3-methyl-4-hydroxyphenyl)henicosane, 1,1-bis(2-hydroxy-3-methylphenyl)henicosane, 1-(2-hydroxy-3-methyl-phenyl)-1-(3-methyl-4-hydroxyphenyl)henicosane, 1,1-bis(3-methyl-4-hydroxyphenyl)docosane, 1,1-bis(2-hydroxy-3-methylphenyl)docosane, 1-(2-hydroxy-3-methyl-phenyl)-1-(3-methyl-4-hydroxyphenyl)docosane, 1,1-bis(3-methyl-4-hydroxyphenyl)tricosane, 1,1-bis(2-hydroxy-3-methylphenyl)tricosane, 1-(2-hydroxy-3-methyl-phenyl)-1-(3-methyl-4-hydroxyphenyl)tricosane,
1,1-bis(3-methyl-4-hydroxyphenyl)tetracosane, 1,1-bis(2-hydroxy-3-methylphenyl)tetracosane, 1-(2-hydroxy-3-methyl-phenyl)-1-(3-methyl-4-hydroxyphenyl)tetracosane, 1,1-bis(3,5-dimethyl-4-hydroxyphenyl)octane, 1,1-bis(3,5-dimethyl-4-hydroxyphenyl)nonane, 1,1-bis(3,5-dimethyl-4-hydroxyphenyl)decane, 1,1-bis(3,5-dimethyl-4-hydroxyphenyl)undecane, 1,1-bis(3,5-dimethyl-4-hydroxyphenyl)dodecane, 1,1-bis(3,5-dimethyl-4-hydroxyphenyl)tridecane, 1,1-bis(3,5-dimethyl-4-hydroxyphenyl)tetradecane, 1,1-bis(3-ethyl-4-hydroxyphenyl)nonane, 1,1-bis(3-ethyl-4-hydroxyphenyl)decane, 1,1-bis(3-ethyl-4-hydroxyphenyl)undecane, 1,1-bis(3-ethyl-4-hydroxyphenyl)dodecane, 1,1-bis(3-propyl-4-hydroxyphenyl)nonane, 1,1-bis(3-propyl-4-hydroxyphenyl)decane, 1,1-bis(3-propyl-4-hydroxyphenyl)undecane, 1,1-bis(3-propyl-4-hydroxyphenyl)dodecane, 1,1-bis(3-butyl-4-hydroxyphenyl)nonane, 1,1-bis(3-butyl-4-hydroxyphenyl)decane, 1,1-bis(3-butyl-4-hydroxyphenyl)undecane, 1,1-bis(3-butyl-4-hydroxyphenyl)dodecane, 1,1-bis(3-nonyl-4-hydroxyphenyl)nonane, 1,1-bis(3-nonyl-4-hydroxyphenyl)decane, 1,1-bis(3-nonyl-4-hydroxyphenyl)undecane, and 1,1-bis(3-nonyl-4-hydroxyphenyl)dodecane.

Among these, from the viewpoint of the thermal stability, hue, and impact strength, the aromatic dihydroxy compound necessary for forming the carbonate structural unit (i) of the aromatic polycarbonate copolymer (B) is more preferably 1,1-bis(4-hydroxyphenyl)octane, 1,1-bis(4-hydroxyphenyl)nonane, 1,1-bis(4-hydroxyphenyl)decane, 1,1-bis(4-hydroxyphenyl)undecane, 1,1-bis(4-hydroxyphenyl)dodecane, 1,1-bis(4-hydroxyphenyl)tridecane, 1,1-bis(4-hydroxyphenyl)tetradecane, 1,1-bis(4-hydroxyphenyl)pentadecane, 1,1-bis(4-hydroxyphenyl)hexadecane, 1,1-bis(4-hydroxyphenyl)heptadecane, 1,1-bis(4-hydroxyphenyl)octadecane, or 1,1-bis(4-hydroxyphenyl)nonadecane, still more preferably 1,1-bis(4-hydroxyphenyl)decane, 1,1-bis(4-hydroxyphenyl)undecane, 1,1-bis(4-hydroxyphenyl)dodecane, or

1,1-bis(4-hydroxyphenyl)tridecane, most preferably 1,1-bis(4-hydroxyphenyl)dodecane.

Specific examples of the aromatic dihydroxy compound necessary for forming the carbonate structural unit (ii) include 2,2-bis(4-hydroxyphenyl)propane, 2,2-bis(2-hydroxyphenyl)propane, and 2-(2-hydroxyphenyl)-2-(4-hydroxyphenyl)propane. Among these, from the viewpoint of the thermal stability, hue, and impact strength, 2,2-bis(4-hydroxyphenyl)propane (the so-called bisphenol A) is more preferred.

Examples of the carbonate-forming compound include carbonyl halides and carbonate esters. A single type of carbonate-forming compound may be used, or two or more types of carbonate-forming compounds may be used in an arbitrary combination at arbitrary ratios.

Specific examples of the carbonyl halides include phosgene; haloformates such as bischloroformate bodies of dihydroxy compounds, and monochloroformate bodies of dihydroxy compounds.

Specific examples of the carbonate esters include the compounds represented by the following Formula (32), for example, aryl carbonates; dialkyl carbonates; biscarbonate bodies of dihydroxy compounds; monocarbonate bodies of dihydroxy compounds; and carbonate bodies of dihydroxy compounds such as cyclic carbonates.

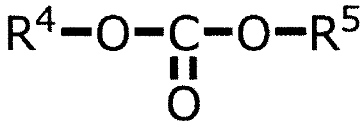

(32)

In Formula (32), $R^4$ and $R^5$ each independently represent $C_1$-$C_{30}$ alkyl, aryl, or arylalkyl. Hereinafter, when $R^4$ and $R^5$ are alky and/or arylalkyl, the carbonate ester may be referred to as dialkyl carbonate, and when $R^4$ and $R^5$ are aryl, the carbonate ester may be referred to as diaryl carbonate. In particular, from the viewpoint of reactivity with the aromatic dihydroxy compound, both $R^4$ and $R^5$ are preferably aryl. The carbonate ester is more preferably a diaryl carbonate represented by the following Formula (33).

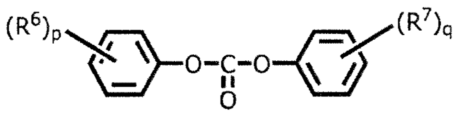

(33)

In Formula (33), $R^6$ and $R^7$ each independently represent a halogen atom, nitro, cyano, $C_1$-$C_{20}$ alkyl, $C_1$-$C_{20}$ alkoxycarbonyl, $C_4$-$C_{20}$ cycloalkyl, or $C_6$-$C_{20}$ aryl, and p and q each independently represent an integer of 0 to 5.

Specific examples of such a carbonate ester include dialkyl carbonates such as dimethyl carbonate, diethyl carbonate, and di-t-butyl carbonate; and (substituted) diaryl carbonates such as diphenyl carbonate, bis(4-methylphenyl)carbonate, bis(4-chlorophenyl)carbonate, bis(4-fluorophenyl)carbonate, bis(2-chlorophenyl)carbonate, bis(2,4-difluorophenyl)carbonate, bis(4-nitrophenyl)carbonate, bis(2-nitrophenyl)carbonate, bis(methylsalicylphenyl)carbonate, and ditolyl carbonate. Among these, diphenyl carbonate is preferred. These carbonate esters may be used individually, or two or more of these may be used as a mixture.

Preferably not more than 50 mol%, more preferably not more than 30 mol% of the carbonate ester may be substituted with a dicarboxylic acid(s) and/or dicarboxylic acid ester(s). Representative examples of the dicarboxylic acid(s) and/or dicarboxylic acid ester(s) include terephthalic acid, isophthalic acid, diphenyl terephthalate, and diphenyl isophthalate. In cases of substitution with such a dicarboxylic acid(s) and/or dicarboxylic acid ester(s), a polyester carbonate is obtained.

The method for producing the aromatic polycarbonate copolymer (B) is the same as the method described above as an example of the production method for the aromatic polycarbonate resin (A).

[Polyalkylene Glycol or Fatty Acid Ester Thereof (C)]

The polycarbonate resin composition for a thin optical component of the present invention preferably contains a polyalkylene glycol or a fatty acid ester thereof (C). By the inclusion of such a polyalkylene glycol or a fatty acid ester thereof (C), the transmittance, hue, and brightness of the polycarbonate resin composition for a thin optical component of the present invention can be increased.

Examples of the polyalkylene glycol include homopolymers and copolymers of alkylene glycols, and derivatives thereof. Specific examples of the polyalkylene glycol include $C_2$-$C_6$ polyalkylene glycols such as polyethylene glycol, polypropylene glycol, and polytetramethylene glycol; random or block copolymers of polyoxyethylene-polyoxypropylene; and copolymers such as glyceryl ethers of polyoxyethylene-polyoxypropylene, and monobutyl ethers of polyoxyethylene-polyoxypropylene. More preferred examples of the polyalkylene glycol include polymers containing an oxyethylene unit,

for example, polyethylene glycol, polypropylene glycol, poly(2-methyl)ethylene ether glycol, polytetramethylene ether glycol, polypropylene ether glycol, polytrimethylene ether glycol, polytetramethylene ether glycol, polypentamethylene ether glycol, polyhexamethylene ether glycol, and polyoxyethylene-polyoxypropylene copolymers, and derivatives thereof.

The number average molecular weight of the polyalkylene glycol is usually 500 to 500,000, preferably 1000 to 100,000, more preferably 1000 to 50,000.

The number average molecular weight of the polyalkylene glycol copolymer is the number average molecular weight calculated based on the hydroxyl value measured according to JIS K1577.

As the fatty acid ester of the polyalkylene glycol fatty acid ester, either a linear or branched fatty acid ester may be used. The fatty acid constituting the fatty acid ester may be either a saturated fatty acid or an unsaturated fatty acid. Fatty acid esters in which a part of the hydrogen atoms are substituted with a substituent(s) such as hydroxyl may also be used.

Examples of the fatty acid constituting the fatty acid ester include monovalent or divalent fatty acids having a carbon number of not less than 10, for example, monovalent saturated fatty acids such as capric acid, lauric acid, tridecylic acid, myristic acid, pentadecylic acid, palmitic acid, heptadecylic acid, stearic acid, nonadecanoic acid, arachic acid, behenic acid, lignoceric acid, cerotic acid, heptacosanoic acid, montanic acid, melissic acid, and lacceric acid; monovalent unsaturated fatty acids having a carbon number of not less than 10 such as unsaturated fatty acids including oleic acid, elaidic acid, linoleic acid, linolenic acid, arachidonic acid, cetoleic acid, and erucic acid; and divalent fatty acids having a carbon number of not less than 10 such as sebacic acid, undecanedioic acid, dodecanedioic acid, tetradecanedioic acid, thapsic acid and decenedioic acid, undecenedioic acid, and dodecenedioic acid. These fatty acids may be used individually, or as a combination of two or more thereof. Examples of the fatty acid also include fatty acids having one or more hydroxyl groups in the molecule.

Preferred specific examples of the polyalkylene glycol fatty acid ester include polyethylene glycol monopalmitate, polyethylene glycol dipalmitate, polyethylene glycol monostearate, polyethylene glycol distearate, polyethylene glycol (monopalmitate-monostearate), polypropylene glycol monopalmitate, polypropylene glycol dipalmitate, polypropylene glycol monostearate, polypropylene glycol distearate, and polypropylene glycol (monopalmitate-monostearate).

The content of the polyalkylene glycol or a fatty acid ester thereof (C) is preferably 0.01 to 1 part by mass with respect to a total of 100 parts by mass of the aromatic polycarbonate resin (A) and the aromatic polycarbonate copolymer (B). The content is more preferably not less than 0.02 part by mass, still more preferably not less than 0.03 part by mass, and more preferably not more than 0.9 part by mass, still more preferably not more than 0.8 part by mass, still more preferably not more than 0.7 part by mass, especially preferably not more than 0.6 part by mass. In cases where the content is less than 0.01 part by mass, improvement of the hue and suppression of yellowing are likely to be insufficient, while in cases where the content exceeds 1 part by mass, yellowing and a decrease in the light transmittance are likely to occur.

[Heat Stabilizer (D)]

The polycarbonate resin composition for a thin optical component of the present invention preferably contains a heat stabilizer (D). By the inclusion of such a heat stabilizer, the hue and the thermal stability of the polycarbonate resin composition for a thin optical component of the present invention can be increased.

The heat stabilizer (D) used in the polycarbonate resin composition for a thin optical component of the present invention is not limited as long as it is a known heat stabilizer, and examples of the heat stabilizer include phosphorus-based heat stabilizers, sulfur-based heat stabilizers, and hindered phenol antioxidants. Among these, phosphorus-based heat stabilizers and hindered phenol antioxidants are preferred since these are likely to allow production of a polycarbonate resin composition for a thin optical component having an excellent hue and residence heat stability. In particular, phosphorus-based heat stabilizers are effective for improvement of the initial hue, and hindered phenol antioxidants are effective for suppressing deterioration of the color tone and a decrease in the molecular weight during molding at high temperature. In particular, combined use of a phosphorus-based heat stabilizer(s) and a hindered phenol antioxidant(s) is preferred since, by this, an excellent hue and residence heat stability can be achieved, and deterioration of the color tone and a decrease in the molecular weight during molding at high temperature can be suppressed.

Examples of the phosphorus-based heat stabilizer used in the present invention include phosphorous acid, phosphoric acid, phosphorous acid esters, and phosphoric acid esters. Phosphorous acid esters such as phosphite and phosphonite are preferred.

In the present invention, preferred examples of the phosphorus-based heat stabilizer include phosphorous acid esters represented by the following Formula (34).

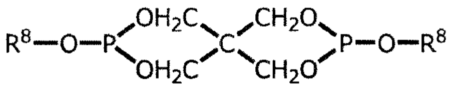

(34)

In Formula (34), $R^8$ represents aryl or alkyl, and these may be either the same or different.

In cases where $R^8$ is aryl, $R^8$ is preferably aryl represented by the following Formula (35), Formula (36), or Formula (37).

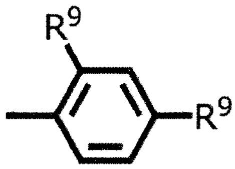

(35)

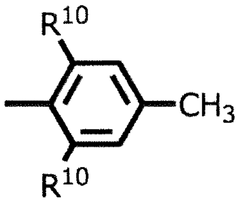

(36)

In the Formulae (35) and (36), $R^9$ and $R^{10}$ each independently represent $C_1$-$C_{10}$ alkyl.

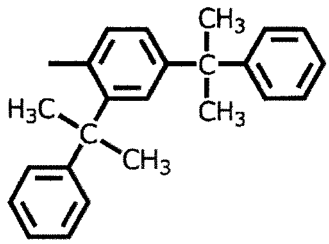

(37)

Examples of such a phosphorous acid ester include bis(2,4-di-*tert*-butylphenyl)pentaerythritol diphosphite, bis(2,6-di-*tert*-butyl-4-methylphenyl)pentaerythritol diphosphite, and bis(2,4-dicumylphenyl)pentaerythritol diphosphite. Specific examples of the phosphorous acid ester include commercially available products such as "Adekastab PEP-24G" and "Adekastab PEP-36", manufactured by ADEKA Corporation; and "Doverphos S-9228", manufactured by Dover Chemical Corporation.

In the Formula (34), the alkyl group of $R^8$ is preferably $C_l$-$C_{30}$ alkyl. Specific examples of the phosphorous acid ester include distearyl pentaerythritol diphosphite and dinonyl pentaerythritol diphosphite. Distearyl pentaerythritol diphosphite is especially preferred.

In the present invention, other preferred examples of the phosphorus-based heat stabilizer include phosphorous acid esters represented by the following General Formula (38).

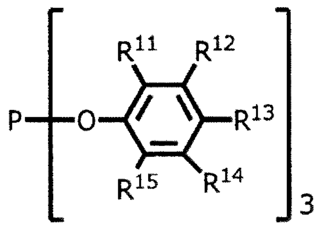

(38)

In the Formula (38), each of $R^{11}$ to $R^{15}$ represents a hydrogen atom, aryl, or $C_1$-$C_{20}$ alkyl, and these may be either the same or different.

In the Formula (38), examples of the aryl or the alkyl in $R^{11}$ to $R^{15}$ include phenyl, methyl, ethyl, propyl, n-propyl, n-butyl, and tert-butyl. Tris(2,4-di-tert-butylphenyl) phosphite, in which $R^{11}$ and $R^{13}$ are tert-butyl, and $R^{12}$, $R^{14}$, and $R^{15}$ are hydrogen atoms, is preferred, and this is commercially available from ADEKA Corporation under the trade name "Adekastab 2112".

[Phenolic Antioxidant]

Examples of the phenolic antioxidant include hindered phenol antioxidants. Specific examples of the hindered phenol antioxidants include pentaerythritol tetrakis[3-(3,5-di-*tert*-butyl-4-hydroxyphenyl)propionate], octadecyl-3-(3,5-di-*tert*-butyl-4-hydroxyphenyl)propionate, thiodiethylene bis[3-(3,5-di-*tert*-butyl-4-hydroxyphenyl)propionate], *N,N*'-hexane-1,6-diylbis[3-(3,5-di-tert-butyl-4-hydroxyphenylpropionamide), 2,4-dimethyl-6-(1-methylpentadecyl)phenol, diethyl[[3,5-bis (1,1-dimethylethyl)-4-hydroxyphenyl]methyl]phosphonate, 3,3',3'',5,5',5''-hexa-*tert*-butyl-a,a',a"-(mesitylene-2,4,6-triyl)tri-p-cresol, 4,6-bis(octylthiomethyl)-*o*-cresol, ethylenebis(oxyethylene)bis[3-(5-*tert*-butyl-4-hydroxy-*m*-tolyl)propionate], hexamethylene bis[3-(3,5-di-tert-butyl-4-hydroxyphenyl)propionate], and 1,3,5-tris(3,5-di-*tert*-butyl-4-hydroxybenzyl)-1,3,5-triazine-2,4,6(1*H*,3*H*,5*H*)-trione,2,6-di-*tert*-butyl-4-(4,6-bis(octylthio)-1,3,5-triazin-2-ylamino)phenol.

Among these, pentaerythritol tetrakis[3-(3,5-di-*tert*-butyl-4-hydroxyphenyl)propionate] and octadecyl-3-(3,5-di-tert-butyl-4-hydroxyphenyl)propionate are preferred. Specific examples of such phenolic antioxidants include "Irganox 1010" and "Irganox 1076", manufactured by BASF; and "Adekastab AO-50" and "Adekastab AO-60", manufactured by ADEKA Corporation.

The polycarbonate resin composition for a thin optical component of the present invention may contain one kind of heat stabilizer (D) or a mixture of two or more kinds of heat stabilizers (D). Normally, the content of the heat stabilizer(s) (D) is preferably 0.005 to 0.5 part by mass with respect to a total of 100 parts by mass of the aromatic polycarbonate resin (A) and the aromatic polycarbonate copolymer (B). In cases where the content of the heat stabilizer (D) is less than the lower limit, the hue and the thermal stability-improving effect of the polycarbonate resin composition for a thin optical component of the present invention are likely to be insufficient, while in cases where the content is more than the upper limit, the effect tends to reach the plateau, and production of gas often occurs during molding to cause mold contamination, which is not preferred. From such a point of view, the content of the thermal stability (D) is more preferably not less than 0.01 part by mass, still more preferably not less than 0.02 part by mass, especially preferably not less than 0.05 part by mass. Further, the content is more preferably not more than 0.3 part by mass, still more preferably not more than 0.2 part by mass, especially preferably not more than 0.1 part by mass.

[Epoxy Compound (E)]

In the present invention, as an epoxy compound (E), a compound having one or more epoxy groups in the molecule may be used. Preferred specific examples of the compound include phenyl glycidyl ether, allyl glycidyl ether, t-butylphenyl glycidyl ether, 3,4-epoxycyclohexylmethyl-3',4'-epoxycyclohexyl carboxylate, 3,4-epoxy-6-methylcyclohexylmethyl-3' ,4'-epoxy-6'-methylcyclohexyl carboxylate, 2,3-epoxycyclohexylmethyl-3',4'-epoxycyclohexyl carboxylate, 4-(3,4-epoxy-5-methylcyclohexyl)butyl-3',4'-epoxycyclohexyl carboxylate, 3,4-epoxycyclohexylethylene oxide, cyclohexylmethyl 3,4-epoxycyclohexyl carboxylate, 3,4-epoxy-6-methylcyclohexylmethyl-6'-methylcyclohexyl carboxylate, bisphenol-A diglycidyl ether, tetrabromobisphenol-A glycidyl ether, diglycidyl ester of phthalic acid, diglycidyl ester of hexahydrophthalic acid, bis-epoxydicyclopentadienyl ether, bis-epoxyethylene glycol, bis-epoxycyclohexyl adipate, butadiene diepoxide, tetraphenylethylene epoxide, octylepoxy tallate, epoxidized polybutadiene, 3,4-dimethyl-1,2-epoxycyclohexane, 3,5-dimethyl-1,2-epoxycyclohexane, 3-methyl-5-*t*-butyl-1,2-epoxycyclohexane, octadecyl-2,2-dimethyl-3,4-epoxycyclohexyl carboxylate, *N*-butyl-2,2-dimethyl-3,4-epoxycyclohexyl carboxylate, cyclohexyl-2-methyl-3,4-epoxycyclohexyl carboxylate, N-butyl-2-isopropyl-3,4-epoxy-5-methylcyclohexyl carboxylate, octadecyl-3,4-epoxycyclohexyl carboxylate, 2-ethylhexyl-3',4'-epoxycyclohexyl carboxylate, 4,6-dimethyl-2,3-epoxycyclohexyl-3',4'-epoxycyclohexyl carboxylate, 4,5-epoxytetrahydrophthalic acid anhydride, 3-t-butyl-4,5-epoxytetrahydrophthalic acid anhydride, diethyl 4,5-epoxy-cis-1,2-cyclohexyl dicarboxylate, di-n-butyl-3-t-butyl-4,5-epoxy-*cis*-1,2-cyclohexyl dicarboxylate, epoxidized soy bean oil, and epoxidized linseed oil.

The epoxy compounds may be used individually, or two or more of the epoxy compounds may be used in combination.

The content of the epoxy compound (E) is 0.0005 to 0.2 part by mass, preferably not less than 0.001 part by mass, more preferably not less than 0.003 part by mass, still more preferably not less than 0.005 part by mass, and preferably not more than 0.15 part by mass, more preferably not more than 0.1 part by mass, still more preferably not more than 0.05 part by mass, with respect to a total of 100 parts by mass of the aromatic polycarbonate resin (A) and the aromatic polycarbonate copolymer (B). In cases where the content of the epoxy compound (E) is less than 0.0005 part by mass, the hue and the heat discoloration resistance are insufficient, while in cases where the content is more than 0.2 part by mass, the heat discoloration resistance is even worse, and the hue and the moist heat stability are also low.

[Ratio Between Contents of Phosphorus-based Heat Stabilizer (D) and Epoxy Compound (E)]

In cases where the phosphorus-based heat stabilizer (D) and the epoxy compound (E) are used in combination in the polycarbonate resin composition of the present invention, the ratio between the contents of the phosphorus-based heat stabilizer (D) and the epoxy compound (E) is preferably within the range of 0.5 to 10 in terms of the mass ratio of (D)/(E). In cases where the mass ratio of (D)/(E) is below 0.5, the hue, especially the initial YI value, is poor, while in cases where the mass ratio exceeds 10, the heat discoloration resistance is poor. The mass ratio of (D)/(E) is preferably not less than 0.7, more preferably not less than 0.8, and preferably not more than 8, more preferably not more than 7, still more preferably not more than 8.

[Other Additives]

The polycarbonate resin composition for a thin optical component of the present invention may further contain various additives as long as the effect of the present invention is not deteriorated. Examples of such additives include flame retardants, mold release agents, ultraviolet absorbers, dyes and pigments, fluorescent brightening agents, anti-drip agents, antistatic agents, anti-clouding agents, lubricants, anti-blocking agents, dispersants, and antimicrobial agents.

[Melt Viscosity of Polycarbonate Resin Composition for Thin Optical Component]

The melt viscosity of the polycarbonate resin composition for a thin optical component of the present invention is not limited, and may be appropriately selected depending on the shape of the molded article of interest. For molding of the later-described thin optical component, the flow value (Q value) as measured using a Koka flow tester according to Appendix C of JIS (1999) K7210 at 240°C at 160 $kgf/cm^2$ is usually preferably not less than 6 (unit: $10^{-2}$ $cm^3$/sec.), more preferably not less than 10, still more preferably not less than 17, especially preferably not less than 20, most preferably not less than 25. The Q value is an index of the melt viscosity. A higher Q value indicates a lower viscosity and a better fluidity. On the other hand, the upper limit of the Q value is not limited as long as the excellent physical properties of the polycarbonate resin composition for a thin optical component of the present invention are not deteriorated. The Q value is usually not more than 100, preferably not more than 90, more preferably not more than 80, still more preferably not more than 70, especially preferably not more than 60.

[Method for Producing Polycarbonate Resin Composition for Thin Optical Component]

The method for producing the polycarbonate resin composition for a thin optical component of the present invention is not limited, and known methods for producing polycarbonate resin compositions may be widely employed. Examples of such methods include methods in which the aromatic polycarbonate resin (A), the aromatic polycarbonate copolymer (B), and other components to be blended as required, are preliminarily mixed together using a mixer such as a tumbler or Henschel mixer, and then the resulting mixture is melt-kneaded in a mixer such as a Banbury mixer, roll, Brabender, single-screw kneading extruder, twin-screw kneading extruder, kneader. The temperature during the melt kneading is usually within the range of 210 to 320°C, preferably 220 to 280°C, most preferably 225 to 260°C. In cases where the melt kneading temperature is too low, the mixture is exposed to significant shear during kneading, resulting in a local increase in the temperature. This may lead to deterioration of the color tone and occurrence of resin burning, which is not preferred. In cases where the melt kneading temperature is too high, the resin tends to suffer from yellowing, and may have a poor color tone, which is not preferred.

[Thin Optical Component]

The polycarbonate resin composition for a thin optical component of the present invention can be used for production of a thin optical component by pelletizing the polycarbonate resin composition and molding the resulting pellets by various molding methods. The composition is especially preferably used for molding of a thin optical component by injection molding. The resin temperature during the injection molding is usually 260 to 380°C. In particular, the molding is preferably carried out at a resin temperature higher than 260 to 300°C, that is, higher than the temperatures generally applied to injection molding of a polycarbonate resin. The resin temperature is preferably 305 to 380°C, more preferably 310 to 375°C, still more preferably 315 to 370°C, especially preferably 320 to 365°C. When a conventional polycarbonate resin composition is used, there is a problem in that, in cases where the resin temperature during molding is increased for molding of a thin molded article, white spots of foreign substances are likely to appear on the surface of the molded article. In contrast, when a polycarbonate resin composition for a thin optical component of the present invention is used, a thin molded article having a good appearance can be produced even within such a temperature range.

When direct measurement of the resin temperature is difficult, the temperature set for the barrel is understood as the resin temperature.

The thin molded article in the present invention means a molded article having a plate-like portion with a thickness of usually not more than 1 mm, preferably not more than 0.8 mm, more preferably not more than 0.6 mm. The plate-like portion may be either a flat plate or a bent plate, and may have either a flat surface or an irregular surface. A cross-section of the plate-like portion may have an inclined plane, or may be a wedge-shaped cross-section.

Examples of the thin optical component include components of devices/appliances that directly or indirectly use light sources such as LEDs, organic EL, incandescent lamps, fluorescent lamps, and cathode lamps. Representative examples of such components include light guide plates and members for surface emitters.

A light guide plate is used for guiding light from a light source such as an LED in a liquid crystal backlight unit, or in a display device or an illuminating device. A light guide plate allows light to enter from its lateral side or back side, and usually diffuses the light through irregularities provided on its surface to cause emission of uniform light. It usually has a flat-plate shape, and may or may not have irregularities on its surface.

Light guide plates are usually preferably molded by injection molding, ultra-high-speed injection molding, injection compression molding.

The light guide plate by the polycarbonate resin composition for a thin optical component of the present invention can be favorably used in the fields of liquid crystal backlight units, and various display devices and illuminating devices. Examples of such devices include mobile terminals such as mobile phones, mobile notebooks, netbooks, slate PCs, tablet PCs, smartphones, and tablet terminals; cameras; watches/clocks; notebook PCs; displays; and illuminating devices.

## EXAMPLES

The present invention is described below more concretely by way of Examples. However, the present invention should not be interpreted as being limited to the following Examples.

The materials used in the following Examples and Comparative Examples are shown below in Table 1.

An aromatic polycarbonate copolymer (B) was produced according to the following Production Example.

### Production Example of Aromatic Polycarbonate Copolymer (B)

A raw material mixture was prepared by mixing 40 parts by mass of 1,1-bis(4-hydroxyphenyl)dodecane, 60 parts by mass of 2,2-bis(4-hydroxyphenyl)propane (bisphenol A), 107 parts by mass of diphenyl carbonate, and, as a catalyst, 2 wt% aqueous cesium carbonate solution such that cesium carbonate was contained at 0.5 $\mu$mol per 1 mol of total dihydroxy compounds. The resulting mixture was fed to a first reactor equipped with a stirrer, heating medium jacket, vacuum pump, and reflux condenser. After replacing the atmosphere with nitrogen, a heating medium at a temperature of 230°C was passed through the heating medium jacket to allow a slow increase in the internal temperature of the first reactor, thereby dissolving the mixture. Thereafter, while rotating the stirrer at 300 rpm and keeping the internal temperature of the first reactor at 220°C, the pressure in the first reactor, in terms of the absolute pressure, was reduced from 101.3 kPa (760 Torr) to 13.3 kPa (100 Torr) for 40 minutes, during which phenol produced as a by-product of oligomerization reaction of the aromatic dihydroxy compounds and diphenyl carbonate was removed by distillation.

Subsequently, while keeping the pressure in the first reactor at 13.3 kPa and further removing phenol by distillation, transesterification reaction was carried out for 80 minutes. After restoring the pressure with nitrogen, the oligomer in the first reactor was transferred into a second reactor at an internal temperature of 240°C equipped with a stirrer, heating medium jacket, vacuum pump, and reflux condenser. While stirring the oligomer at 38 rpm, the internal temperature was increased using the heating medium jacket. The pressure in the second reactor, in terms of the absolute pressure, was reduced from 101.3 kPa to 13.3 kPa for 40 minutes. Thereafter, the temperature was kept increased, and the internal pressure, in terms of the absolute pressure, was reduced from 13.3 kPa to 399 Pa (3 Torr) for 40 minutes while removing distilled phenol to the outside of the system. The temperature was further kept increased, and when the absolute pressure in the second reactor reached 70 Pa (about 0.5 Torr), the pressure of 70 Pa was maintained to perform polycondensation reaction. The final internal temperature of the second reactor was 255°C. When the stirring power of the stirrer in the second reactor reached a predetermined value, the polycondensation reaction was stopped. After restoring the pressure in the rector with nitrogen, pressure was applied to allow extraction from the bottom of the tank. By cooling in a water-cooling tank, an aromatic polycarbonate copolymer was obtained. Thereafter, butyl paratoluenesulfonate was mixed at 5 ppm with the obtained aromatic polycarbonate copolymer, and the resulting mixture was melt-kneaded in a 30-mm diameter twin-screw extruder at 240°C to form a strand-shaped product, followed by cutting it with a pelletizer to obtain a pellet-shaped aromatic polycarbonate copolymer.

In the obtained aromatic polycarbonate copolymer, the ratio of the carbonate structure (i) derived from the Formula (19) to the total carbonate structural units was 30 mol%, and the viscosity average molecular weight (Mv) was

15,000.

[Table 1]

| Component | Code | |
|---|---|---|
| Aromatic polycarbonate resin (A) | A1 | An aromatic polycarbonate resin produced by interfacial polymerization using bisphenol A as a starting material.<br>Viscosity average molecular weight (Mv): 14,000 |
| | A2 | An aromatic polycarbonate resin produced by interfacial polymerization using bisphenol A as a starting material.<br>Viscosity average molecular weight (Mv): 12,500 |
| Aromatic polycarbonate copolymer (B) | B | An aromatic polycarbonate copolymer composed of the structural units of Formula (19) and Formula (26).<br>The ratio of the carbonate structural unit (i) derived from Formula (19) in the total carbonate structural units: 30 mol% Viscosity average molecular weight (Mv): 15,000 |
| Polyalkylene glycol | C1 | A poly(2-methyl)ethylene ether glycol represented by $HO(CH(CH_3)CH_2O)nH$, n=17 Manufactured by NOF Corporation; trade name, "Uniol D-2000"<br>Number average molecular weight: 2000 |
| Polyalkylene glycol | C2 | A polytetramethylene ether glycol represented by $HO(CH_2CH_2CH_2CH_2O)nH$, n=21 Manufactured by Mitsubishi Chemical Corporation; trade name, "PTMG 1500" Number average molecular weight: 1500 |
| Heat stabilizer | D1 | Bis(2,6-di-tert-butyl-4-methylphenyl)pentaerythritol diphosphite Manufactured by ADEKA Corporation; trade name, "Adekastab PEP-36" |
| Heat stabilizer | D2 | Octadecyl-3-(3,5-di-*tert*-butyl-4-hydroxyphenyl) propionate Manufactured by BASF; trade name, "Irganox 1076" |
| Heat stabilizer | D3 | Pentaerythritol tetrakis[3-(3,5-di-tert-butyl-4-hydroxyphenyl)propionate] Manufactured by BASF; trade name, "Irganox 1010" |
| Epoxy compound | E | 3,4-Epoxycyclohexylmethyl-3',4'-epoxycyclohexyl carboxylate Manufactured by Daicel Corporation; trade name, "Celloxide 2021P" |

(Examples 1 to 4, Comparative Examples 1 to 3)

[Production of Resin Composition Pellets]

Each component shown in Table 1 was blended at the ratio (part by mass) described in Table 2, and the resulting mixture was mixed in a tumbler for 20 minutes. Thereafter, the mixture was melt-kneaded in a twin-screw extruder having a screw diameter of 22 mm with a vent ("TEM26SX", manufactured by Toshiba Machine Co., Ltd.) at a cylinder temperature of 240°C and a screw speed of 180 rpm, and pellets were obtained by strand cutting.

[Flow Value: Q Value]

For the obtained resin composition pellets, the flow value (Q value; unit, cc/sec.) was measured using a CFT-500D type flow tester manufactured by Shimadzu Corporation and an orifice of 1-mm diameter × 10 mm according to Appendix C of JIS (1999) K7210 at 240°C at 160 kgf/$cm^2$ with a preheating time of 7 minutes.

Table 2 shows the values obtained. A higher flow value (Q value) indicates a higher fluidity and better moldability, while a lower flow value (Q value) indicates a lower fluidity and poorer moldability.

[Charpy Notched Impact Strength]

Injection molding was carried out using an injection molding machine (J55-60H, manufactured by Japan Steel Works, Ltd.) at a cylinder temperature of 260°C and a mold temperature of 80°C with a molding cycle of 50 seconds to mold an ISO multi-purpose test piece (3 mm). According to ISO179, the prepared ISO multi-purpose test piece (3-mm thickness) was subjected to notch processing, and the Charpy notched impact strength (unit: kJ/$m^2$) was measured at

23°C.

[Test for Cracking During Molding of Light Guide Plate]

A flat-plate-shaped light guide plate with a short side of 61 mm, a long side of 110 mm, and a thickness of 0.45 mm having a prism on its mold-fixed side was molded by injection molding. The prism was provided with a pattern having a 50-μm pitch and a 14-μm depth. The injection molding was carried out using an injection molding machine "HSP100A" manufactured by Sodick Plustech Co., Ltd. at a mold temperature of 40°C, a cylinder temperature of 360°C, and an injection speed of 400 mm/sec. The molding was carried out for 50 shots, and the number of cracked plates was counted.

[Light Guide Plate Bending Test]

The light guide plate obtained as described above was subjected to a light guide plate bending test using Instron (Type 5544, manufactured by Instron), wherein the support span was 10 mm; the test speed was 10 mm/min.; the bend direction was parallel to the direction of the flow during molding; the molded article was placed such that the prism pattern faced downward; and a jig having a width of 3 mm and a point angle of 30° was used. In this test, the maximum point load (unit: N) was measured. A higher maximum point load indicates a higher strength, which means that cracking is less likely to occur.
The evaluation results are shown below in Table 2.

[Hue (YI Value)]

The obtained pellets were dried using a hot air circulation dryer at 100°C for 5 to 7 hours, and then molded into a long-optical-path molded article (300 mm × 7 mm × 4 mm) using an injection molding machine ("EC100SX-2A", manufactured by Toshiba Machine Co., Ltd.) at a resin temperature of 360°C and a mold temperature of 80°C.
This long-optical-path molded article was subjected to measurement of the YI value (the degree of yellowing) at an optical path length of 300 mm. The measurement was carried out using a Long Pathlength Transmission Spectrophotometer ("ASA 1", manufactured by Nippon Denshoku Industries Co., Ltd.; C light source; viewing angle, 2°).
The evaluation results are shown below in Table 2.

[Table 2]

| Component | Code | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|---|
| Aromatic polycarbonate resin (A) | A1 | 74 | 82 | 84 | 91 | 84 | 84 | 84 | 71 | 76 | 100 |
| | A2 | 26 | 18 | 16 | 9 | 16 | 16 | 16 | 29 | 24 | 0 |
| Aromatic polycarbonate copolymer (B) | B | 34 .3 | 22.1 | 18.5 | 9.8 | 25.0 | 25.0 | 25. 0 | 0 | 0 | 0 |
| Polyalkylene glycol | C1 | 0.1 | 0.3 | 0.4 | 0 .5 | 0.4 | 0.4 | | 0.3 | 0.3 | 0.3 |
| Polyalkylene glycol | C2 | | | | | | | 1.0 | | | |
| Heat stabilizer | D1 | 0.04 | 0.04 | 0.05 | 0.05 | 0.06 | 0.06 | 0.03 | 0.03 | 0.03 | 0.03 |
| Heat stabilizer | D2 | | | | | 0.13 | | | | | |
| Heat stabilizer | D3 | | | | | | 0.13 | | | | |
| Epoxy compound | E | | | | | | | 0.04 | | | |
| Evaluation results | | | | | | | | | | | |
| Flow value (Q value) (0.01 cc/sec.) | | 29 | 28 | 28 | 28 | 29 | 29 | 30 | 28 | 26.5 | 17.6 |
| Charpy impact strength ($kJ/m^2$) | | 2.0 | 2.3 | 4.6 | 5.2 | 7.3 | 7.4 | 6.8 | 0.9 | 1.1 | 7.5 |
| Cracking during molding of light guide plate (number of cracked plates / number of molding shots) | | - | - | 1/50 | - | - | - | - | 35/50 | 30/50 | 0/50 |
| Light guide plate bending test maximum point load (N) | | - | - | 1218 | - | - | - | - | 1075 | 1094 | 1241 |
| YI value | | - | - | 27 | 26 | 25 | 25 | 21 | 23 | 23 | 23 |

As is evident from Table 2, Examples 1 to 4, each of which contains the aromatic polycarbonate copolymer (B) in the present invention, have improved impact strength compared to Comparative Example 1, which does not contain the aromatic polycarbonate copolymer (B), when the fluidity was adjusted to similar levels.

Among these, Example 3, which contains the aromatic polycarbonate copolymer (B) in the present invention, exhibited a better balance between the fluidity and the impact resistance compared to Comparative Examples 2 and 3, which do not contain the aromatic polycarbonate copolymer (B). In particular, it can be seen that, in comparison with Comparative Example 2, Example 3 shows a much lower level of cracking in molding of the light guide plate.

Thus, the polycarbonate resin composition for a thin optical component of the present invention, containing both the aromatic polycarbonate resin (A) and the aromatic polycarbonate copolymer (B), has an excellent balance between the fluidity and the impact resistance, and exhibits sufficient strength even in cases where it is formed into a thin optical component such as a light guide plate. It is therefore clear that the composition can be suitably used for such a component.

INDUSTRIAL APPLICABILITY

By the polycarbonate resin composition for a thin optical component of the present invention, the strength of a molded article after molding can be increased while fluidity sufficient for molding of a thin optical member can be maintained. Therefore, cracking, which may occur in a thin optical member, can be remarkably reduced. Thus, the composition can be extremely favorably used for thin optical components, and its industrial applicability is very high.

## Claims

1. A polycarbonate resin composition for a thin optical component, said composition comprising:

   100 parts by mass of an aromatic polycarbonate resin (A) having a viscosity average molecular weight (Mv) of 10,000 to 15,000, wherein (Mv) is determined as indicated in the description; and
   2 to 100 parts by mass of an aromatic polycarbonate copolymer (B) including a carbonate structural unit (i) represented by the following Formula (1):

   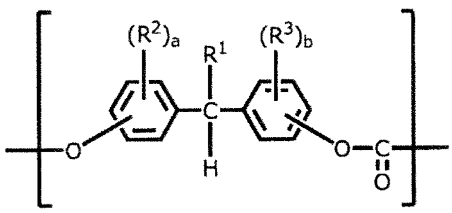
   (1)

   (wherein in Formula (1), $R^1$ represents $C_8$-$C_{24}$ alkyl or alkenyl; $R^2$ and $R^3$ each independently represent a $C_1$-$C_{15}$ monovalent hydrocarbon group; and a and b each independently represent an integer of 0 to 4) and a carbonate structural unit (ii) represented by the following Formula (2):

   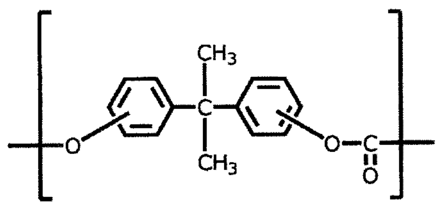
   (2) ;

   wherein the ratio of the carbonate structural unit (i) to a total of 100 mol% of the carbonate structural unit (i) and the carbonate structural unit (ii) in the aromatic polycarbonate copolymer (B) is more than 10 mol% and less than 39 mol%.

2. The polycarbonate resin composition for a thin optical component according to claim 1, further comprising 0.01 to 1 part by mass of polyalkylene glycol or a fatty acid ester thereof (C) with respect to a total of 100 parts by mass of the aromatic polycarbonate resin (A) and the aromatic polycarbonate copolymer (B).

3. The polycarbonate resin composition for a thin optical component according to claim 1 or 2, further comprising 0.005 to 0.5 part by mass of a heat stabilizer (D) with respect to a total of 100 parts by mass of the aromatic polycarbonate resin (A) and the aromatic polycarbonate copolymer (B).

4. The polycarbonate resin composition for a thin optical component according to claim 3, wherein the heat stabilizer (D) is a phosphorus-based antioxidant.

5. A method for producing a thin optical component, said method comprising the step of molding the polycarbonate resin composition according to any one of claims 1 to 4.

6. The method for producing a thin optical component according to claim 5, wherein the thin optical component is a light guide plate having a thickness of not more than 1 mm.

7. A method for producing a thin optical component having a thickness of not more than 1 mm, said method comprising the step of performing injection molding of the polycarbonate resin composition according to any one of claims 1 to 4 at 260 to 380°C.

**Patentansprüche**

1. Eine Polycarbonatharzzusammensetzung für eine dünne optische Komponente, wobei die Zusammensetzung umfasst:

   100 Massenteile eines aromatischen Polycarbonatharzes (A) mit einem Viskositätsmittel des Molekulargewichts (Mv) von 10.000 bis 15.000, wobei (Mv) wie in der Beschreibung angegeben bestimmt wird; und
   2 bis 100 Massenteile eines aromatischen Polycarbonat-Copolymers (B), das eine Carbonat-Struktureinheit (i), dargestellt durch die folgende Formel (1), umfasst:

   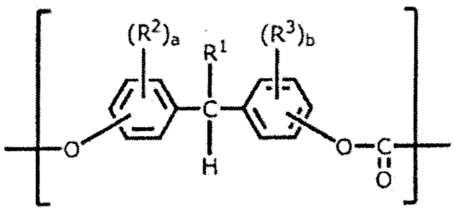
   (1)

   (wobei in Formel (1) $R^1$ $C_8$-$C_{24}$-Alkyl oder -Alkenyl darstellt; $R^2$ und $R^3$ jeweils unabhängig voneinander eine einwertige $C_1$-$C_{15}$-Kohlenwasserstoffgruppe darstellen; und a und b jeweils unabhängig voneinander eine ganze Zahl von 0 bis 4 darstellen) und eine Carbonat-Struktureinheit (ii), dargestellt durch die folgende Formel (2):

   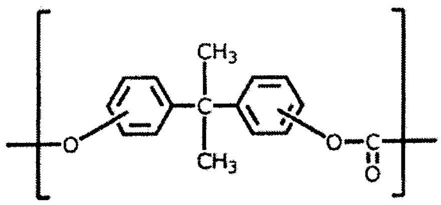
   (2)

   wobei das Verhältnis der Carbonat-Struktureinheit (i) zu insgesamt 100 mol-% der Carbonat-Struktureinheit (i) und der Carbonat-Struktureinheit (ii) in dem aromatischen Polycarbonat-Copolymer (B) mehr als 10 mol-% und weniger als 39 mol-% beträgt.

2. Die Polycarbonatharzzusammensetzung für eine dünne optische Komponente gemäß Anspruch 1, ferner umfassend 0,01 bis 1 Massenteil Polyalkylenglykol oder einen Fettsäureester davon (C), bezogen auf insgesamt 100 Massenteile des aromatischen Polycarbonatharzes (A) und des aromatischen Polycarbonat-Copolymers (B).

3. Die Polycarbonatharzzusammensetzung für eine dünne optische Komponente gemäß Anspruch 1 oder 2, ferner umfassend 0,005 bis 0,5 Massenteile eines Wärmestabilisators (D) bezogen auf insgesamt 100 Massenteile des

aromatischen Polycarbonatharzes (A) und des aromatischen Polycarbonat-Copolymers (B).

4. Die Polycarbonatharzzusammensetzung für eine dünne optische Komponente gemäß Anspruch 3, wobei der Wärmestabilisator (D) ein Antioxidans auf Phosphorbasis ist.

5. Ein Verfahren zur Herstellung einer dünnen optischen Komponente, wobei das Verfahren den Schritt des Formens der Polycarbonatharzzusammensetzung gemäß einem der Ansprüche 1 bis 4 umfasst.

6. Das Verfahren zur Herstellung einer dünnen optischen Komponente gemäß Anspruch 5, wobei die dünne optische Komponente eine Lichtleiterplatte mit einer Dicke von nicht mehr als 1 mm ist.

7. Ein Verfahren zur Herstellung einer dünnen optischen Komponente mit einer Dicke von nicht mehr als 1 mm, wobei das Verfahren den Schritt des Durchführens des Spritzgießens der Polycarbonatharzzusammensetzung gemäß einem der Ansprüche 1 bis 4 bei 260 bis 380°C umfasst.

**Revendications**

1. Composition de résine de polycarbonate pour un composant optique mince, ladite composition comprenant :

100 parties en masse d'une résine de polycarbonate aromatique (A) ayant une masse moléculaire moyenne en viscosité (Mv) de 10 000 à 15 000, dans laquelle (Mv) est déterminée comme indiqué dans la description ; et 2 à 100 parties en masse d'un copolymère de polycarbonate aromatique (B) comprenant un motif structurel carbonate (i) représenté par la formule (1) suivante :

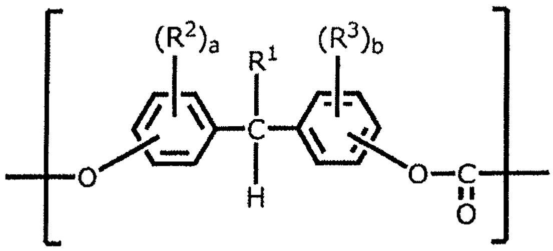

(1)

(où, dans la formule (1), $R^1$ représente un alkyle ou alcényle en $C_8$ à $C_{24}$ ; chacun de $R^2$ et $R^3$ représente indépendamment un groupe hydrocarboné monovalent en $C_1$ à $C_{15}$ ; et chacun de a et b représente indépendamment un entier de 0 à 4) et un motif structurel carbonate (ii) représenté par la formule (2) suivante :

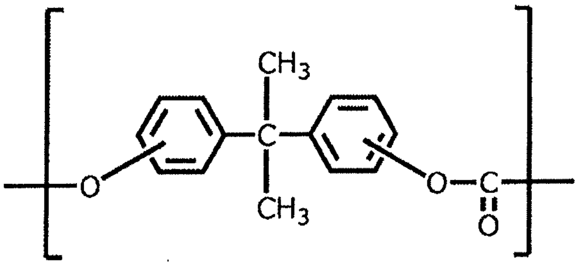

(2)

dans laquelle le rapport du motif structurel carbonate (i) au total de 100 % en moles du motif structurel carbonate (i) et du motif structurel carbonate (ii) dans le copolymère de polycarbonate aromatique (B) est supérieur à 10% en moles et inférieur à 39% en moles.

2. Composition de résine de polycarbonate pour un composant optique mince selon la revendication 1, comprenant en outre 0,01 à 1 partie en masse de polyalkylèneglycol ou d'un ester d'acide gras de celui-ci (C) pour un total de 100 parties en masse de la résine de polycarbonate aromatique (A) et du copolymère de polycarbonate aromatique (B).

3. Composition de résine de polycarbonate pour un composant optique mince selon la revendication 1 ou 2, comprenant en outre 0,005 à 0,5 partie en masse d'un stabilisant à la chaleur (D) pour un total de 100 parties en masse de la résine de polycarbonate aromatique (A) et du copolymère de polycarbonate aromatique (B).

4. Composition de résine de polycarbonate pour un composant optique mince selon la revendication 3, dans laquelle le stabilisant à la chaleur (D) est un antioxydant à base de phosphore.

5. Méthode pour produire un composant optique mince, ladite méthode comprenant l'étape de moulage de la composition de résine de polycarbonate de l'une quelconque des revendications 1 à 4.

6. Méthode pour produire un composant optique mince selon la revendication 5, dans laquelle le composant optique mince est une plaque de guide d'onde ayant une épaisseur non supérieure à 1 mm.

7. Méthode pour produire un composant optique mince ayant une épaisseur non supérieure à 1 mm, ladite méthode comprenant l'étape de mise en oeuvre d'un moulage par injection de la composition de résine de polycarbonate de l'une quelconque des revendications 1 à 4 à une température de 260 à 380 °C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010037380 A
- JP 2013139097 A
- JP 5001144 A
- JP 6128371 A
- JP 59131623 A
- US 4446285 A


### Non-patent literature cited in the description


- *Macromol. Chem.,* 1965, vol. 88, 215